# EUROPÄISCHE PATENTANMELDUNG

(11) **EP 4 491 292 A1**
(43) Veröffentlichungstag der Anmeldung: **15.01.2025**
(21) Anmeldenummer: 24188229.9
(22) Anmeldetag: 12.07.2024
(51) Int. Cl.: B08B 9/08, B67D 3/00, G01G 17/04

(54) **KOPPELEINRICHTUNG FÜR KANISTER**

(30) Priorität: 14.07.2023 DE 202023103948 U; 07.11.2023 EP 23208296
(71) Anmelder: Lechler GmbH, 72555 Metzingen (DE)
(72) Erfinder: Knupfer, Hannes, 72539 Pfronstetten (DE); Heinkel, Robert, 72581 Dettingen/Erms (DE); Bahnmüller, Andreas, 72555 Metzingen (DE)
(74) Vertreter: Patentanwälte Ruff, Wilhelm, Beier, Dauster & Partner mbB

(57) **Zusammenfassung**

Eine Koppeleinrichtung (10) für Kanister (12), insbesondere für Kanister mit Innendeckelverschluss für ein geschlossenes Transfersystem für Pflanzenschutzmittel und/oder Flüssigdünger, mit einem Gehäuse (32) mit einem Einlass zum Ankoppeln einer Auslassöffnung eines Kanisters, mit einem Auslass zum Verbinden mit einer Mischeinrichtung und/oder einem Vorratstank, mit Ventilmitteln zum Öffnen und Verschließen einer Strömungsverbindung vom Einlass zum Auslass, und mit einer Reinigungslanze (24), wobei die Reinigungslanze im angekoppelten Zustand des Kanisters in den Kanister einschiebbar ist, wobei eine Wiegeeinrichtung (46) zum Erfassen eines Gewichts des Kanisters im angekoppelten Zustand vorgesehen ist und wobei wenigstens eine flexible Muffe (240a, 240b) in einer Strömungsverbindung zwischen dem Einlass und dem Auslass vorgesehen ist, um eine Flüssigkeitsleitung vom Einlass bis zu der elastischen Muffe von einer Flüssigkeitsleitung von der elastischen Muffe zum Auslass mechanisch weitgehend zu entkoppeln.

## Beschreibung

Die Erfindung betrifft eine Koppeleinrichtung für Kanister, insbesondere für Kanister mit Innendeckelverschluss für ein geschlossenes Transfersystem für Pflanzenschutzmittel und/oder Flüssigdünger, mit einem Gehäuse mit einem Einlass zum Ankoppeln einer Auslassöffnung eines Kanisters, mit einem Auslass zum Verbinden mit einer Mischeinrichtung und/oder einem Vorratstank, mit Ventilmitteln zum Öffnen und Verschließen einer Strömungsverbindung von Einlass zum Auslass und mit einer Reinigungslanze, wobei die Reinigungslanze im angekoppelten Zustand des Kanisters in den Kanister einschiebbar ist.

Aus der internationalen Offenlegungsschrift WO 2018/115285 A1 ist eine Koppeleinrichtung für Kanister mit Innendeckelverschluss für ein geschlossenes Transfersystem für Pflanzenschutzmittel und/oder Flüssigdünger bekannt. Die Koppeleinrichtung weist ein Gehäuse mit einem Einlass zum Ankoppeln einer Auslassöffnung eines Kanisters, mit einem Auslass zum Verbinden mit einer Mischeinrichtung und/oder einem Vorratstank, mit Ventilmitteln zum Öffnen und Verschließen einer Strömungsverbindung vom Einlass zum Auslass und mit einer Reinigungslanze auf, wobei die Reinigungslanze im angekoppelten Zustand des Kanisters in den Kanister einschiebbar ist. Die Koppeleinrichtung ist für Kanister mit Innendeckelverschluss, sogenannte Easyconnect-Innendeckelverschlüsse, ausgelegt. Nach dem Aufsetzen des Kanisters auf die Koppeleinrichtung wird der Kanister zunächst an der Koppeleinrichtung fixiert und dann mittels Drehung eines Hebels der Innendeckelverschluss geöffnet. Dabei wird eine Lanze in das Volumen des Kanisters hineingeschoben, wobei die Schiebebewegung der Lanze mittels Betätigung eines zweiten Hebels erfolgt. Ventilmittel zwischen Einlass und Auslass der Koppeleinrichtung werden dann manuell geöffnet, bis die gewünschte Sollmenge an Flüssigkeit aus dem Kanister entnommen wurde. Wird der Kanister vollständig entleert, so kann die Lanze als Reinigungslanze verwendet werden, um den Innenraum des Kanisters und dann auch die Außenseite des Innendeckelverschlusses des Kanisters, zu reinigen. Durch Zurückdrehen des ersten Hebels wird der Kanister dann wieder freigegeben und kann von der Koppeleinrichtung abgenommen werden.

Eine weitere Koppeleinrichtung für Kanister für ein geschlossenes Transfersystem für Pflanzenschutzmittel und/oder Flüssigdünger ist aus der deutschen Offenlegungsschrift DE 102016110009 A1 und aus der internationalen Offenlegungsschrift WO 2019/094883 A1 bekannt.

Mit der Erfindung soll eine Koppeleinrichtung für Kanister verbessert werden.

Erfindungsgemäß ist hierzu eine Koppeleinrichtung für Kanister mit den Merkmalen von Anspruch 1 vorgesehen. Vorteilhafte Weiterbildungen der Erfindung sind in den Unteransprüchen angegeben.

Eine Koppeleinrichtung für Kanister, insbesondere für Kanister mit Innendeckelverschluss für ein geschlossenes Transfersystem für Pflanzenschutzmittel und/oder Flüssigdünger weist ein Gehäuse mit einem Einlass zum Ankoppeln einer Auslassöffnung eines Kanisters, mit einem Auslass zum Verbinden mit einer Mischeinrichtung und/oder einem Vorratstank, mit Ventilmitteln zum Öffnen und Verschließen einer Strömungsverbindung vom Einlass zum Auslass und mit einer Reinigungslanze auf, wobei die Reinigungslanze im angekoppelten Zustand des Kanisters in den Kanister einschiebbar ist, und wobei eine Wiegeeinrichtung zum Erfassen eines Gewichts des Kanisters im angekoppelten Zustand vorgesehen ist.

Es ist wenigstens eine flexible Muffe in einer Strömungsverbindung zwischen dem Einlass und dem Auslass vorgesehen, um eine Flüssigkeitsleitung vom Kanister bis zu der elastischen Muffe bzw. vom Einlass bis zur elastischen Muffe von einer Flüssigkeitsleitung von der elastischen Muffe zu der Mischeinrichtung und/oder dem Vorratstank bzw. von der elastischen Muffe bis zu dem Auslass mechanisch weitgehend zu entkoppeln.

Mit einer Wiegeeinrichtung kann das Gewicht des Kanisters im angekoppelten Zustand fortlaufend erfasst werden. Dadurch kann festgestellt werden, gegebenenfalls nach einer Umrechnung beziehungsweise einer Verarbeitung der Messwerte, wieviel Flüssigkeit aus dem Kanister entnommen wurde. Dadurch kann eine Ist-Menge an entnommener Flüssigkeit bestimmt werden und diese Ist-Menge kann dann in der Wiegeeinrichtung oder einer der Wiegeeinrichtung zugeordneten elektronischen Steuereinheit mit einer Soll-Menge verglichen werden, die beispielsweise von einem Bediener eingegeben wurde oder die automatisch eingelesen wurde. Mittels der Wiegeeinrichtung kann das Gewicht des Teils der Koppeleinrichtung erfasst werden, an das der Kanister angekoppelt ist. Bei bekanntem Gewicht dieses Teils der Koppeleinrichtung kann dadurch auch das aktuelle Gewicht des Kanisters erfasst werden. Auch ein Gewicht des leeren Kanisters kann berücksichtigt werden, so dass eine äußerst präzise Bestimmung des Gewichts des Kanisters zu unterschiedlichen Zeitpunkten der Entnahme sowie dadurch auch eine äußerst präzise Bestimmung der entnommenen Flüssigkeitsmenge möglich ist. Durch Vorsehen wenigstens einer flexiblen Muffe kann sichergestellt werden, dass trotz der im Betrieb der Koppeleinrichtung auftretenden Vibrationen, Schwingungen und Stöße beispielsweise durch eine Pumpe einer Feldspritze, durch Fahrbetrieb eines Zugfahrzeugs oder auch nur durch Vibrationen der Flüssigkeitsleitung, die von der Koppeleinrichtung zu der Mischeinrichtung und/oder dem Vorratstank führt, das Messergebnis der Wiegeeinrichtung nicht nachteilig beeinflussen. Die erfindungsgemäße Koppeleinrichtung ist zum Einbringen von Pflanzenschutzmitteln und/oder Flüssigdünger vorgesehen. Gerade bei Pflanzenschutzmitteln sind die Anforderungen an eine Präzision, mit der eine Menge des Pflanzenschutzmittels bemessen wird, extrem hoch. Beispielsweise wird eine Mengenabweichung von maximal 25 g verlangt. Das Vorsehen wenigstens einer flexiblen Muffe ermöglicht es, dass Vibrationen, Schwingungen und Stöße die von einem Gehäuse oder von der Flüssigkeitsleitung übertragen werden, nicht weiter in die Wiegeeinrichtung eingeleitet werden. Eine mechanische Entkopplung ist dabei notwendigerweise nicht vollständig, da mittels der elastischen Muffe noch eine mechanische Verbindung besteht. Eine Elastizität bzw. eine Übertragungsfunktion der flexiblen Muffe ist aber so bemessen, dass keine Stöße, Schwingungen oder auch Vibrationen übertragen werden, die das Messergebnis der Wiegeeinrichtung negativ beeinflussen können. In diesem Sinne wird mittels der wenigstens einen flexiblen Muffe eine weitgehende mechanische Entkopplung erzielt. Die flexible und insbesondere elastische Muffe kann beispielsweise als elastisches Schlauchstück oder als Faltenbalg ausgebildet sein.

In Weiterbildung der Erfindung sind in der Strömungsverbindung zwischen dem Einlass und dem Auslass zwei elastische Muffen vorgesehen, wobei die beiden Muffen bezüglich ihrer Durchströmungsrichtung parallel zueinander angeordnet sind.

Es hat sich herausgestellt, dass eine Anordnung von zwei Muffen mit paralleler Durchströmungsrichtung eine äußerst wirkungsvolle mechanische Entkopplung erzielen kann. Unter parallel angeordneten Durchströmungsrichtungen ist dabei zu verstehen, dass die Durchströmungsrichtungen parallel zueinander angeordnet sind, aber beispielsweise auch entgegengesetzt gerichtet sein können.

In Weiterbildung der Erfindung sind die beiden flexiblen Muffen mittels eines U-förmigen Bogens der Flüssigkeitsleitung miteinander verbunden.

Auf diese Weise kann eine nochmals verbesserte mechanische Entkopplung erzielt werden. Es kann beispielsweise vermieden werden, dass eine Ausdehnung oder eine Verkürzung einer flexiblen Muffe auf die Wiegeeinrichtung übertragen wird, da die zweite flexible Muffe in gleicher Weise verkürzt oder gelängt wird und diese Bewegung lediglich zu einer Bewegung des U-förmigen Bogens führt, nicht aber auf die Wiegeeinrichtung übertragen wird. Vorteilhafterweise ist der U-förmige Bogen mechanisch ausschließlich mit den beiden flexiblen Muffen verbunden, nicht aber mit einem Gehäuse oder dergleichen.

In Weiterbildung der Erfindung sind die beiden flexiblen Muffen horizontal angeordnet.

Auf diese Weise beeinflusst eine Verkürzung oder Verlängerung der flexiblen Muffen durch Druckschwankungen nicht das Wiegeergebnis, da mittels der Wiegeeinrichtung eine immer vertikal wirkende Gewichtskraft erfasst wird. Vorteilhafterweise sind die beiden flexiblen Muffen horizontal und nebeneinander bzw. übereinander angeordnet.

In Weiterbildung der Erfindung ist die wenigstens eine flexible Muffe als Faltenbalg ausgebildet.

Mittels eines Faltenbalgs kann eine sehr geringe Steifigkeit der flexiblen Muffe erzielt werden, so dass verhindert werden kann, dass Schwingungen, Vibrationen und/oder Stöße auf die Wiegeeinrichtung übertragen werden.

In Weiterbildung der Erfindung weist die Wiegeeinrichtung wenigstens eine Wiegezelle auf, insbesondere weist die Wiegezelle einen mit Dehnmessstreifen versehenen Haltebolzen oder eine mit dem Haltebolzen verbundene Druckzelle auf.

Mit dem wenigstens einen Haltebolzen ist dasjenige Teil der Koppeleinrichtung verbunden, an das der Kanister angekoppelt wird. Das Gewicht der Koppeleinrichtung sowie das sich verändernde Gewicht des Kanisters beim Entnehmen von Flüssigkeit führt zu einer unterschiedlichen Verformung oder einer Bewegung des Haltebolzens. Diese Verformung oder Bewegung des Haltebolzens kann mittels der Dehnmessstreifen oder mittels der Druckzelle erfasst werden, wodurch dann letztendlich das aktuelle Gewicht des Kanisters zu unterschiedlichen Zeitpunkten während des Entnehmens von Flüssigkeit bestimmt werden kann. Im Rahmen der Erfindung kann die Wiegeeinrichtung eine Wiegezelle oder mehrere Wiegezellen aufweisen.

In Weiterbildung der Erfindung ist das Gehäuse mit dem wenigstens einen Haltebolzen verbunden, wobei der Haltebolzen auf die Wiegezelle einwirkt.

Das Außengehäuse steht beispielsweise auf einem Fundament oder ist am Rahmen eines landwirtschaftlichen Geräts, beispielsweise eine Feldspritze, fixiert. Das Gehäuse der Koppeleinrichtung, an das der Kanister angekoppelt wird, ist mit dem wenigstens einen Haltebolzen verbunden. Dadurch kann mittels des wenigstens einen Haltebolzens bzw. mittels der Dehnmessstreifen auf dem Haltebolzen oder der Druckzelle, auf die die Haltebolzen einwirken, ein Gewicht des Gehäuses einschließlich eines gegebenenfalls angekoppelten Kanisters erfasst werden. Die Wiegeeinrichtung kann an dem Außengehäuse angeordnet sein und beispielsweise mit Gummipuffern mit dem Außengehäuse verbunden sein.

Es kann eine Fixiereinrichtung vorgesehen sein, um wahlweise das Gehäuse am Außengehäuse zu fixieren, wobei die Fixiereinrichtung zusätzlich zu dem wenigstens einen Haltebolzen vorgesehen ist.

Auf diese Weise kann beispielsweise im Fahrbetrieb oder bei Außerbetriebnahme der Koppeleinrichtung der wenigstens eine Haltebolzen entlastet werden. Dadurch wird vermieden, dass der wenigstens eine Haltebolzen, beispielsweise bei Erschütterungen im Fahrbetrieb oder bei unsachgemäßer Handhabung, zu stark belastet wird. Die Fixiereinrichtung kann mit einem Aktor gekoppelt sein und beispielsweise einen Sperrbolzen aufweisen, der vom Außengehäuse aus in eine passende Ausnehmung am Gehäuse eingeschoben wird. Das Einrücken bzw. Ausrücken der Fixiereinrichtung kann automatisch unter Steuerung einer Steuereinheit erfolgen.

In Weiterbildung der Erfindung sind ein erster Anschlag und ein zweiter Anschlag am Außengehäuse vorgesehen, wobei ein Abschnitt der Wiegeeinrichtung zwischen dem ersten Anschlag und dem zweiten Anschlag angeordnet ist, wobei der Abschnitt im Abstand von dem ersten Anschlag und im Abstand von dem zweiten Anschlag angeordnet ist, um eine Bewegung des Abschnitts der Wiegeeinrichtung relativ zum Außengehäuse auf einen Wegebereich zwischen dem ersten Anschlag und dem zweiten Anschlag zu begrenzen.

Auf diese Weise kann eine übermäßige Bewegung der Wiegeeinrichtung, beispielsweise im Fahrbetrieb, vermieden werden. Wenn die Koppeleinrichtung beispielsweise an einer Feldspritze angeordnet ist und diese über Feldwege transportiert wird, wird die Wiegeeinrichtung zwangsläufig durch die auftretenden Beschleunigungen und Stöße relativ zum Außengehäuse ausgelenkt. Eine übermäßige Bewegung und eine dadurch möglicherweise auftretende Beschädigung der Wiegeeinrichtung kann durch den ersten Anschlag und den zweiten Anschlag verhindert werden.

In Weiterbildung der Erfindung ist die Wiegeeinrichtung mittels elastischer Puffer mit dem Außengehäuse verbunden.

Auf diese Weise können beispielsweise Vibrationen während des Wiegebetriebs eliminiert bzw. deren Einfluss auf das Messergebnis minimiert oder ausgeschaltet werden. Vibrationen können beispielsweise durch einen Pumpenbetrieb während des Wiegens auftreten.

In Weiterbildung der Erfindung weist die Wiegeeinrichtung mehrere Wiegezellen, insbesondere drei Wiegezellen, insbesondere drei mit Dehnmessstreifen versehene Haltebolzen oder drei Druckzellen, auf.

Auf diese Weise kann das Gewicht des Gehäuses sowie des Kanisters auf mehrere, insbesondere drei, Haltebolzen aufgeteilt werden. Dadurch kann eine sehr zuverlässige Messung erzielt werden.

Eine elektronische Steuereinheit, die mit der Wiegeeinrichtung gekoppelt ist, kann zusätzlich mit einem Lagesensor oder Neigungssensor versehen sein, beispielsweise ein Gyro-Lagesensor. Auf diese Weise kann beispielsweise erfasst werden, ob die Koppeleinrichtung exakt vertikal ausgerichtet ist oder schräg zum Erdboden angeordnet ist. Diese Information über eine Winkellage kann bei der Auswertung eines Messwerts der Wiegeeinrichtung berücksichtigt werden, so dass eine Winkelkompensation vorgenommen werden kann. Eine aus einem Kanister entnommene Flüssigkeitsmenge kann dadurch hochpräzise bestimmt werden.

In Weiterbildung der Erfindung weist die Wiegeeinrichtung mehrere Wiegezellen, insbesondere drei Wiegezellen, insbesondere drei mit Dehnmessstreifen versehene Haltebolzen oder drei Druckzellen auf, wobei die Wiegezellen auf einer gedachten Kreislinie gleichmäßig beabstandet voneinander, insbesondere in einem Winkel von jeweils 120° zueinander, angeordnet sind.

Auf diese Weise kann eine gleichmäßige Verteilung der Belastung der einzelnen Wiegezellen erzielt werden, wodurch präzise Messwerte der Wiegeeinrichtung begünstigt werden.

In Weiterbildung der Erfindung ist eine mit der Wiegeeinrichtung gekoppelte elektronische Steuereinheit vorgesehen.

Mittels einer elektronischen Steuereinheit können die von den Wiegezellen der Wiegeeinrichtung erfassten Messwerte verarbeitet werden, beispielsweise in Volumen umgerechnet werden und/oder es können Steuersignale in Abhängigkeit der Messwerte erzeugt und ausgegeben werden.

In Weiterbildung der Erfindung ist die Steuereinheit mit den Ventilmitteln gekoppelt, um in Abhängigkeit von Messwerten der Wiegeeinrichtung die Ventilmittel zwischen Einlass und Auslass zu öffnen oder zu schließen.

In Weiterbildung der Erfindung ist die Steuereinheit ausgebildet, insbesondere mittels einer auf der Steuereinheit ablaufenden Software, die Ventilmittel zwischen Einlass und Auslass zu schließen, wenn eine Sollmenge für eine Entnahme von Flüssigkeit aus dem Kanister erreicht ist und dadurch den Entnahmevorgang zu beenden.

Mittels der Wiegeeinrichtung kann die entnommene Ist-Menge an Flüssigkeit bestimmt werden, gegebenenfalls nach Umrechnung mittels der elektronischen Steuereinheit, und nach einem Vergleich der entnommenen Ist-Menge mit der Soll-Menge können die Ventilmittel geschlossen oder geöffnet werden, um die Soll-Menge möglichst präzise zu erreichen. Das Schließen der Ventilmittel kann kurz vor Erreichen der Soll-Menge in mehreren Schritten oder inkrementell erfolgen, um die Soll-Menge möglichst exakt zu erreichen.

In Weiterbildung der Erfindung ist die Steuereinheit ausgebildet, insbesondere mittels einer auf der Steuereinheit ablaufenden Software, um nacheinander aus mehreren Kanistern entnommene Teilmengen an Flüssigkeit aufzuaddieren.

Beispielsweise kann zur Vorbereitung eines Spritzvorgangs ein erster Kanister vollständig entleert werden und aus einem zweiten Kanister kann dann noch eine Teilmenge hinzugefügt werden, um die für den Spritzvorgang benötigte Sollmenge zu erreichen. Da die Steuereinheit eine Addition der entnommenen Teilmengen vornimmt, entfallen fehleranfällige Kalkulationen und Berechnungen eines Bedieners.

In Weiterbildung der Erfindung ist die Steuereinheit ausgebildet, insbesondere mittels einer auf der Steuereinheit ablaufenden Software, ein Volumen einer entnommenen Flüssigkeitsmenge mittels wenigstens eines Messwerts der Wiegeeinrichtung und einer abgespeicherten oder eingelesenen Dichte der entnommenen Flüssigkeit zu berechnen.

Die Steuereinheit weist beispielsweise eine Eingabevorrichtung auf, um eine Dichte einer in einem Kanister befindlichen Flüssigkeit einzugeben. Die Steuereinheit kann aber auch eine Leseeinrichtung aufweisen, um eine Dichte einzulesen. Eine solche Leseeinrichtung kann beispielsweise als Code-Leseeinrichtung ausgebildet sein, um einen Buchstabencode, einen Zahlencode, einen Strichcode oder einen zweidimensionalen QR-Code einzulesen. Der Code kann beispielsweise auf dem Kanister selbst angeordnet sein.

In Weiterbildung der Erfindung weist die Steuereinheit Mittel auf, insbesondere eine Leseeinrichtung für einen Code, insbesondere mittels einer auf der Steuereinheit ablaufenden Software, um Eigenschaften einer Flüssigkeit in einem angekoppelten Kanister, insbesondere Dichte, automatisch in einen Speicher der Speichereinheit einzulesen, insbesondere mittels einer Codeleseeinrichtung.

Die Mittel sind beispielsweise als Codeleseeinrichtung ausgebildet oder auch als RFID-Leseeinrichtung. Beispielsweise ist der Kanister mit einem Etikett versehen und die Codeleseeinrichtung kann einen Code auf dem Etikett automatisch einlesen, wenn der Kanister angekoppelt ist, um beispielsweise die Dichte der Flüssigkeit im Kanister einzulesen. Die eingelesenen Daten können aber beispielsweise auch ein Mischungsverhältnis oder dergleichen enthalten. Der Kanister kann beispielsweise auch mit einem RFID-Chip versehen sein, der dann von einem Lesegerät der Koppeleinrichtung ausgelesen wird, wenn der Kanister an die Koppeleinrichtung angekoppelt ist. Der RFID-Chip enthält üblicherweise lediglich eine eineindeutige Kennzeichnung, insbesondere eine Zahl. Dieser Zahl werden dann in einer Datenbank Daten einer in dem Kanister befindlichen Flüssigkeit zugeordnet.

In Weiterbildung der Erfindung wird mittels der auf der Steuereinheit ablaufenden Software ein Kanister als vollständig entleert erkannt, wenn die Wiegeeinrichtung innerhalb eines vordefinierten Zeitraums, insbesondere innerhalb von einer Sekunde, keine Gewichtsänderung mehr innerhalb vordefinierter Schwellwerte erfasst.

Auf einfache und verlässliche Weise kann dadurch festgestellt werden, wenn ein Kanister vollständig entleert ist. Die Schwellwerte sind in der Norm ISO 21191 definiert. Beispielsweise liegen die Schwellwerte bei ± 25 g. Liegt eine Schwankung des Messergebnisses der Wiegeeinrichtung innerhalb solcher Schwellwerte, kann mit ausreichender Sicherheit festgestellt werden, dass der Kanister vollständig entleert ist.

In Weiterbildung der Erfindung ist vorgesehen, dass eine Steuereinheit und wenigstens ein Aktor vorgesehen sind, um das Ankoppeln des Kanisters, das Entnehmen von Flüssigkeit aus dem Kanister, das Spülen eines Innenraums des Kanisters und/oder eine Außenseite des Verschlusses des Kanisters, und/oder das Abkoppeln des Kanisters automatisch, insbesondere mittels einer auf der Steuereinheit ablaufenden Software, vorzunehmen.

Der Kanister wird beispielsweise von Hand auf die Koppeleinrichtung aufgesetzt und eine zu entnehmende Soll-Menge wird in eine Steuereinheit eingegeben oder eingelesen. Das Ankoppeln des Kanisters, das Entnehmen der vorgegebenen Soll-Menge an Flüssigkeit aus dem Kanister, das Spülen eines Innenraumes des Kanisters und/oder einer Außenseite eines Verschlusses des Kanisters sowie das Abkoppeln des Kanisters werden dann automatisch mittels einer auf der Steuereinheit ablaufenden Software vorgenommen. Nach dem Spülen des Kanisters wird der Kanister wieder automatisch freigegeben, so dass er wieder von der Koppeleinrichtung abgenommen werden kann.

In Weiterbildung der Erfindung ist die Reinigungslanze relativ zum Gehäuse und in einem wenigstens abschnittsweise in den Kanister eingeschobenen Zustand um ihre Längsachse drehbar.

Mittels einer im Kanister drehbaren Reinigungslanze kann eine Reinigungswirkung wesentlich verbessert werden und insbesondere muss der Kanister nicht von Hand relativ zum Gehäuse verdreht werden, was die Gefahr birgt, dass sich der Kanister löst. Durch Drehung der Reinigungslanze können alle Punkte der Innenwand des Kanisters erreicht werden und an allen Punkten der Innenwand des Kanisters kann die Reinigungsflüssigkeit mit einem ausreichend großen Impact auftreffen, um Reste der ursprünglich im Kanister enthaltenen Flüssigkeit, beispielsweise Pflanzenschutzmittel und/oder Flüssigdünger, abzuspülen. Im Rahmen der Erfindung kann die Reinigungslanze automatisch auch gleichzeitig um ihre Längsachse gedreht und in den Kanister eingeschoben oder ein Stück weit aus dem Kanister ausgeschoben werden. Dadurch ist eine äußerst gründliche Reinigung der Innenwand des Kanisters sichergestellt und für unterschiedliche Kanisterformen sind beispielsweise unterschiedliche Reinigungsabläufe möglich.

In Weiterbildung der Erfindung ist ein erster Aktor, insbesondere ein Elektromotor, der mit einer Gewindespindel gekoppelt ist, vorgesehen, um die Reinigungslanze relativ zum Gehäuse und wenigstens abschnittsweise in den Kanister hinein zu verschieben.

Mittels eines ersten Aktors, insbesondere eines Elektromotors, kann eine Verschiebebewegung der Reinigungslanze gesteuert erfolgen. Das Einschieben in mehreren Schritten, mit jeweiligem Zwischenhalt ist dadurch realisierbar. Der erste Aktor kann beispielsweise mit einer Gewindespindel zusammenwirken, um eine gleichmäßige Einschiebebewegung und Ausschiebebewegung der Reinigungslanze relativ zum Kanister zu erzielen. Ein Elektromotor kann mittels einer Kette mit der Gewindespindel gekoppelt werden.

In Weiterbildung der Erfindung ist ein erster Aktor, insbesondere ein Elektromotor, vorgesehen, um die Reinigungslanze relativ zum Gehäuse um eine Längsachse der Reinigungslanze zu drehen.

Auf diese Weise kann eine Sprühdüse, oder mehrere Sprühdüsen, die an der Reinigungslanze angeordnet sind, jeden Punkt der Innenwand des Kanisters erreichen. Eine gekoppelte Verschiebebewegung und Drehbewegung ist im Rahmen der Erfindung möglich, um eine besonders gründliche Reinigung auch von großen, insbesondere hohen, Kanistern zu ermöglichen. Eine Drehung kann beispielsweise um 180° erfolgen. Wenn zwei oder mehr Sprühdüsen an der Reinigungslanze angeordnet sind, die beispielsweise in entgegengesetzten Richtungen sprühen, kann dadurch ein Innenumfang eines Kanisters vollständig gereinigt werden. Der erste Aktor ist infolgedessen sowohl für eine axiale Verschiebung der Reinigungslanze relativ zum Gehäuse als auch für eine Drehung der Reinigungslanze relativ zum Gehäuse um eine Längsachse der Reinigungslanze zuständig. Eine Kopplung des Aktors mit der Gewindespindel erfolgt mittels einer Kette. Eine Drehung der Gewindespindel kann dann nicht nur eine Verschiebung der Reinigungslanze relativ zum Gehäuse, sondern gleichzeitig auch eine Drehung der Reinigungslanze zum Gehäuse bewirken. Gegebenenfalls kann die Reinigungslanze so mit der Gewindespindel gekoppelt werden, dass sich entweder die Reinigungslanze nur relativ zum Gehäuse dreht, nur relativ zum Gehäuse verschoben wird oder gleichzeitig relativ zum Gehäuse verschoben und gedreht wird.

In Weiterbildung der Erfindung ist eine Kulissenbahn vorgesehen, um die Reinigungslanze relativ zum Gehäuse zu verschieben und/oder zu drehen.

Mittels einer Kulissenbahn kann beispielsweise eine Verschiebebewegung in eine Drehbewegung bzw. in eine kombinierte Verschiebe- und Drehbewegung umgesetzt werden. Beispielsweise hat die Kulissenbahn einen geradlinigen Abschnitt und einen wendelförmigen Abschnitt, um beim Verschieben der Reinigungslanze nach oben die Reinigungslanze zunächst geradlinig nach oben zu verschieben und dann zusätzlich zu einer weiteren Verschiebung nach oben zu drehen. Auf diese Weise kann eine Innenwand eines Kanisters zuverlässig gereinigt werden.

In Weiterbildung der Erfindung sind eine Gewindespindel und wenigstens ein mit der Gewindespindel verbundener Kulissenstein vorgesehen, der in der Kulissenbahn aufgenommen ist.

Durch einfaches Drehen der Gewindespindel, beispielsweise mit einem Elektromotor, kann dadurch die Reinigungslanze nach oben verschoben werden und je nach Ausbildung der Kulissenbahn, in die der Kulissenstein eingreift, kann die durch die Gewindespindel verursachte Verschiebebewegung der Reinigungslanze mit einer Drehbewegung überlagert werden.

In Weiterbildung der Erfindung ist ein zweiter Aktor, insbesondere ein Elektromotor, vorgesehen, um einen an die Koppeleinrichtung angesetzten Kanister zu fixieren und die Ventilmittel zu betätigen.

Eine Kopplung des zweiten Aktors mit einem Koppelmechanismus zum Fixieren und Freigeben des Kanisters und mit den Ventilmitteln erfolgt mittels einer Kette. Das Fixieren des Kanisters kann somit unabhängig vom Verschieben der Reinigungslanze in den Kanister hinein erfolgen. Beim Verschieben der Reinigungslanze in den Kanister hinein kann auch gleichzeitig der Verschluss des Kanisters geöffnet werden. Es ist damit möglich, den Kanister zunächst zu fixieren, indem der zweite Aktor verwendet wird. In einem zweiten Schritt kann der Kanister geöffnet werden, indem beispielsweise ein Innendeckelverschluss des Kanisters geöffnet wird, indem die Reinigungslanze mittels des ersten Aktors in den Kanister hineingeschoben wird. Mittels des zweiten Aktors können dann die Ventilmittel geöffnet werden, so dass über die Reinigungslanze Flüssigkeit aus dem Kanister entnommen werden kann. Mittels des zweiten Aktors werden die Ventilmittel zum Beenden der Entnahme von Flüssigkeit wieder geschlossen. Mittels des ersten Aktors wird die Reinigungslanze dann wieder aus dem Kanister herausgefahren und gleichzeitig wird der Innendeckelverschluss des Kanisters geschlossen. Wenn der Kanister vollständig entleert wurde, kann mittels der Reinigungslanze vor dem Verschließen des Kanisters der Innenraum des Kanisters noch gespült werden. Mittels des zweiten Aktors wird nach Beendigung des Spülvorgangs der an die Koppeleinrichtung angesetzte Kanister wieder freigegeben.

Der erste Aktor und/oder der zweite Aktor können als Schrittmotor ausgebildet sein.

Auf diese Weise ist eine Winkelposition und Verschiebeposition der Reinigungslanze einer Steuereinheit bekannt und geeignete Reinigungsprogramme könnten automatisch abgefahren werden. Beim Öffnen und Schließen der Ventilmittel kann mittels eines Schrittmotors zwischen einem langsamen Öffnen oder Verschließen und einem schnellen Öffnen oder Verschließen der Ventile unterschieden werden. Beispielsweise werden die Ventilmittel kurz vor Erreichen der Sollmenge ein Stück weit geschlossen, um auf diese Weise die Sollmenge möglichst exakt zu erreichen. Es ist beispielsweise auch das inkrementelle Schließen der Ventilmittel kurz vor Erreichen der Sollmenge realisierbar, um sich der Sollmenge an entnommener Flüssigkeit langsam anzunähern. Wird hingegen Spülflüssigkeit abgelassen, können die Ventilmittel schnell vollständig geöffnet werden.

Es kann ein Schutzgehäuse, insbesondere mit einem Deckel, vorgesehen sein, in dem das Gehäuse, insbesondere auch ein Außengehäuse, der Koppeleinrichtung angeordnet ist.

Auf diese Weise kann dann, wenn die Koppeleinrichtung beispielsweise an einem landwirtschaftlichen Gerät, beispielsweise einer Feldspritze, angeordnet ist, die Koppeleinrichtung vor Beschädigung und Verschmutzung geschützt werden, indem das Schutzgehäuse im Fahrbetrieb geschlossen wird. Soll ein Kanister an die Koppeleinrichtung angekoppelt werden, wird beispielsweise der Deckel des Schutzgehäuses geöffnet. Nach Entnehmen einer Sollmenge an Flüssigkeit aus dem Kanister wird der Kanister wieder abgekoppelt, der Deckel geschlossen und im beispielsweise dann darauf folgenden Spritzbetrieb ist die Koppeleinrichtung vor Verschmutzung geschützt.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, dargestellten und/oder beschriebenen Ausführungsformen der Erfindung können in beliebiger Weise miteinander kombiniert werden, ohne den Rahmen der Erfindung zu überschreiten. Dies gilt auch für die Kombination von Einzelmerkmalen ohne weitere Einzelmerkmale, mit denen sie im Zusammenhang dargestellt sind.

In den Zeichnungen zeigen:
- Fig. 1: eine Seitenansicht einer erfindungsgemäßen Kopplungseinrichtung gemäß einer ersten Ausführungsform,
- Fig. 2: eine Ansicht auf die Schnittebene A-A in Fig. 1,Fig. 3 die Einzelheit Z aus Fig. 2 im vergrößerten Maßstab,
- Fig. 4: eine Ansicht einer erfindungsgemäßen Koppeleinrichtung gemäß einer zweiten Ausführungsform von schräg oben,
- Fig. 5: eine Schnittansicht der Koppeleinrichtung der Fig. 4,
- Fig. 6: die Schnittansicht der Fig. 5 in kleinerem Maßstab,
- Fig. 7: die Einzelheit A aus Fig. 6 in vergrößertem Maßstab,
- Fig. 8: die Einzelheit B aus Fig. 6 in vergrößertem Maßstab,
- Fig. 9: eine Teilschnittansicht der Koppeleinrichtung der Fig. 4,
- Fig. 10: die Einzelheit C aus Fig. 9 in vergrößertem Maßstab,
- Fig. 11: die Koppeleinrichtung der Fig. 4 bei abgenommenem Schutzgehäuse von schräg unten,
- Fig. 12: die Koppeleinrichtung der Fig. 11 von schräg oben,
- Fig. 13: eine stark vereinfachte, schematische Darstellung einer Feldspritze mit der erfindungsgemäßen Koppeleinrichtung,
- Fig. 14: eine teilweise Darstellung der erfindungsgemäßen Koppeleinrichtung unter einem ersten Blickwinkel von schräg oben und
- Fig. 15: eine weitere teilweise Darstellung der erfindungsgemäßen Koppeleinrichtung unter einem zweiten Blickwinkel von schräg oben.

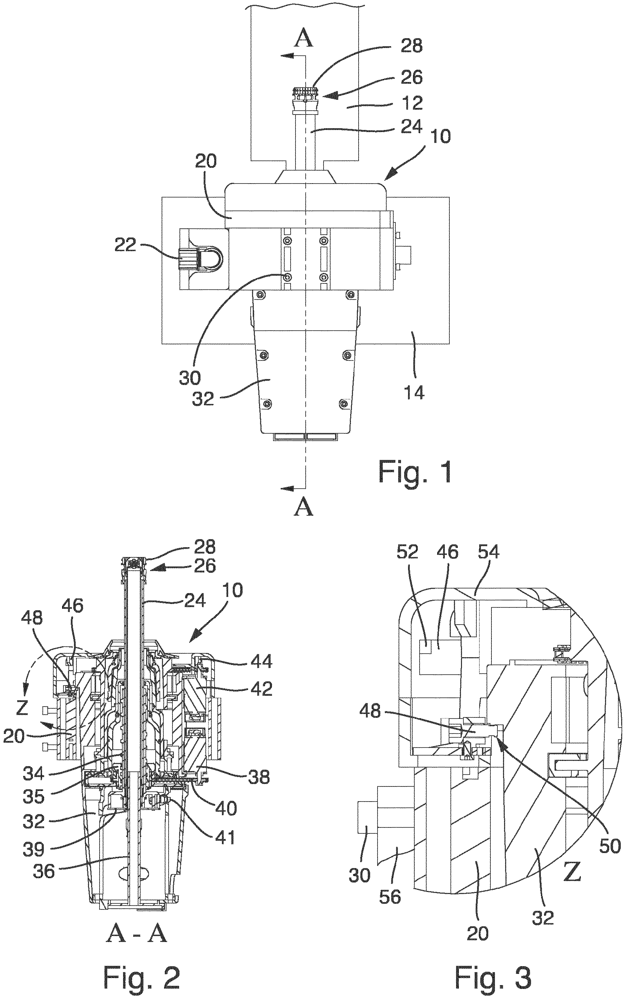

Fig. 1 zeigt eine Seitenansicht einer erfindungsgemäßen Koppeleinrichtung 10, auf die ein lediglich schematisch dargestellter Kanister 12 aufgesetzt ist und die an einem lediglich schematisch dargestellten Rahmen 14 eines landwirtschaftlichen Geräts, beispielsweise einer Feldspritze, befestigt ist. Die Koppeleinrichtung 10 kann auch stationär eingesetzt werden und könnte dann beispielsweise in einer Halle an einer Gebäudewand oder an einem Halterahmen befestigt sein.

Die dargestellte Ausführungsform der Koppeleinrichtung 10 arbeitet mit dem sogenannten Easyconnect-System. Der Kanister 12 weist einen sogenannten Easyconnect-Schraubverschluss auf, der einen Innendeckelverschluss hat. Ohne Abschrauben des Verschlusses kann der Innendeckel von der Koppeleinrichtung geöffnet werden. Der Fachmann kann beispielsweise den eingangs genannten Druckschriften WO 2018/115285 A1 und WO 2019/094883 A1 die Funktionsweise des Easyconnect-Systems entnehmen.

Das Easyconnect-System ist ein geschlossenes Transfersystem (CTS) für flüssige Pflanzenschutzmittel. Es besteht aus zwei Komponenten: einem speziellen Verschluss, der sich bereits auf dem Kanister 12 mit Pflanzenschutzmittel befindet, wobei die Kanister 12 unterschiedliche Formen und Größen aufweisen können, und einer Koppeleinrichtung, dem sogenannten Coupler. In Fig. 1 ist der Verschluss nicht dargestellt, der Kanister 12 lediglich schematisch.

Zusammen genutzt, können die Koppeleinrichtung 10 und der Verschluss beim Befüllen des Pflanzenschutzgerätes Zeit und Aufwand sparen. Daneben wird eine mögliche Exposition eines Bedieners wesentlich verringert und die Gefahr von Spritzern, von Tropfen und Dämpfen während des Befüllvorgangs minimiert.

Der vormontierte Easyconnect-Schraubverschluss auf dem Kanister 12 mit Pflanzenschutzmittel weist einen integrierten Innendeckel auf, so dass sich eine Dichtungsfolie erübrigt. Um das Entnehmen von Flüssigkeit zu beginnen, öffnet die Koppeleinrichtung 10 den Innendeckel und Flüssigkeit kann aus dem Kanister 12 entnommen werden. Nach Abschluss der Entnahme wird, wenn der Kanister 12 noch nicht vollständig geleert ist, der Innendeckel geschlossen und dann wird mittels der Koppeleinrichtung 10 eine Außenseite des Innendeckels gespült. Wurde der Kanister 12 vollständig entleert, wird mittels der Koppeleinrichtung 10 eine Innenwand des Kanisters 12 gespült, danach wird der Innendeckel wieder verschlossen und es wird eine Außenseite des Innendeckels gespült beziehungsweise gereinigt. Alle diese Vorgänge sind vollkommen auslaufsicher. Es ist kein Adapter erforderlich.

Die Koppeleinrichtung 10 fixiert und trägt den Kanister. Die Entleerung des Kanisters 12 erfolgt schnell und komfortabel direkt in das Pflanzenschutzgerät, beispielsweise eine Feldspritze. Die Entnahme aus dem Kanister 12 erfolgt entweder vollständig oder als Teilmenge, was mittels einer Messvorrichtung, speziell einer Wiegeeinrichtung, erfasst wird. Das Entnehmen von Flüssigkeit erfolgt beispielsweise mittels der Schwerkraft oder die Flüssigkeit wird abgesaugt.

Während des Entnehmens, des Spülens und des Verschließens ist der Kanister 12 sicher auf der Koppeleinrichtung 10 eingespannt beziehungsweise fixiert. Nach der vollständigen Entleerung reinigt das in die Koppeleinrichtung 10 integrierte Spülsystem den Kanister 12 auf seiner Innenseite. Bei Teilmengenentnahme wird die Außenseite des Innendeckels des Schraubverschlusses durch das integrierte Spülsystem gereinigt, so dass der Kanister 12 nach dem Abnehmen von der Koppeleinrichtung 10 sicher gelagert werden kann und für die nächste Nutzung bereitsteht.

Dank des geschlossenen Systems können die flüssigen Pflanzenschutzmittel direkt in den Spritztank des Pflanzenschutzgerätes gefüllt werden. Der Schraubverschluss bleibt auf dem Kanister 12 und braucht niemals von Hand auf- oder zugeschraubt werden.

Die Koppeleinrichtung 10 weist ein Außengehäuse 20 auf, das an dem Rahmen 14 der Feldspritze befestigt ist. Die Befestigung des Außengehäuses 20 an dem Rahmen 14 erfolgt mittels einer nicht dargestellten Einpunktaufhängung. Dadurch kann eine vibrationsarme Fixierung der Koppeleinrichtung 10 realisiert werden. In der Seitenansicht der Fig. 1 ist ein elektrisches Ventil 22 zur Kanisterreinigung erkennbar. Wenn der Kanister 12 vollständig entleert ist und sich eine Reinigungslanze 24 wenigstens abschnittsweise innerhalb des Kanisters befindet, kann das elektrische Ventil 22 geöffnet werden und Spülwasser tritt aus einem Sprühkopf 26 der Reinigungslanze 24 aus. Oberhalb des Sprühkopfs 26 ist ein Innendeckel 28 des Kanisterverschlusses des Kanisters 12 erkennbar. Dieser Innendeckel 28 wird beim Einfahren der Reinigungslanze 24 in den Innenraum des Kanisters 12 abgehoben. Im Zustand der Fig. 1 ist der Kanister 12 sicher an der Koppeleinrichtung 10 fixiert.

Nach dem Spülen einer Innenwand des Kanisters 12 wird die Reinigungslanze 24 aus dem Kanister herausgezogen. Dabei wird der Innendeckel 28 des Kanisterverschlusses wieder an seine vorgesehene Position gebracht, so dass der Kanister 12 dann wieder sicher und flüssigkeitsdicht verschlossen ist. Eine Außenseite des Innendeckels 28, die in Fig. 1 unten liegt und nicht sichtbar ist, wird dann noch mittels des Sprühkopfs 26 oder zusätzlicher Spüldüsen gereinigt. Anschließend kann das Ventil 22 geschlossen werden und der dann vollständig gereinigte und entleerte Kanister kann von der Koppeleinrichtung 10 wieder freigegeben und abgenommen werden.

Wenn der Kanister 12 beispielsweise mit Pflanzenschutzmittel gefüllt ist, wird dieser in die in Fig. 1 dargestellte Lage gebracht und wird an der Koppeleinrichtung 10 fixiert. Die Reinigungslanze 24 wird dann in die in Fig. 1 dargestellte Position in den Innenraum des Kanisters 12 hinein verschoben, wodurch auch der Innendeckel 28 vom Kanisterverschluss abgehoben wird. Das Entnehmen von Flüssigkeit, beispielsweise Pflanzenschutzmittel, aus dem Kanister 12 erfolgt dann über einen Kanal in der Reinigungslanze 24. Wenn beispielsweise lediglich eine Teilmenge aus dem Kanister 12 entnommen werden soll, wird ein Entnahmeventil geschlossen, die Reinigungslanze 24 wieder zurückgezogen und der Innendeckel 28 an seine ursprüngliche Position im Kanisterverschluss gebracht. Auch in diesem Fall ist der dann lediglich teilweise geleerte Kanister flüssigkeitsdicht verschlossen. Nach dem Zurückziehen der Reinigungslanze 24 wird entweder mittels des Sprühkopfs 26 der Reinigungslanze 24 oder zusätzlicher Spüldüsen eine Außenseite des Innendeckels 28 gereinigt. Danach kann die Fixierung des Kanisters 12 an der Koppeleinrichtung 10 aufgehoben werden und der mittels des Innendeckels 28 verschlossene Kanister kann wieder abgehoben werden.

In der Seitenansicht der Fig. 1 sind Schraubbolzen 30 erkennbar, die zur Befestigung eines Displays dienen. Auf dem Display kann beispielsweise ein Gewicht des Kanisters 12 angezeigt werden, wobei die zugehörige Wiegeeinrichtung noch erläutert wird.

In Fig. 1 ist ein Gehäuse 32 der Koppeleinrichtung 10 zu erkennen, das in das Außengehäuse 20 der Koppeleinrichtung 10 eingehängt ist, was nachstehend noch beschrieben wird. Der Kanister 12 ist an das Gehäuse 32 angekoppelt.

Fig. 2 zeigt eine Ansicht auf die Schnittebene A-A in Fig. 1. Zu erkennen ist die Reinigungslanze 24 mit dem Sprühkopf 26, wobei auf dem oberen Ende der Reinigungslanze 24 der Innendeckel 28 angeordnet ist. Der Kanister 12 ist in Fig. 2 der Übersichtlichkeit halber nicht dargestellt. Die Reinigungslanze 24 erstreckt sich in das Gehäuse 32 hinein. Die Reinigungslanze 24 erstreckt sich in eine hohle Gewindespindel 34 hinein, die wiederum relativ zum Gehäuse 32 verdreht werden kann. Bei einer Drehung der Gewindespindel 34 relativ zum Gehäuse wird die Reinigungslanze 24 entweder aus dem Gehäuse 32 heraus in die in Fig. 2 dargestellte Position oder in Fig. 2 nach unten, in das Gehäuse 32 hinein verschoben. Ein Stück weit erstreckt sich ein Führungsrohr 36 in die Reinigungslanze 24 hinein. Über das Führungsrohr 36 wird dem Kanister 12, vgl. Fig. 1,beim Entnehmen von Flüssigkeit Luft zur Entlüftung zugeführt. Wasser zum Spülen wird in einem Ringraum zwischen der Gewindespindel 34 und einem Wasserrohr 35 geführt, alternativ zwischen dem Innenrohr 36 und dem Wasserrohr 35, wenn das Innenrohr 36 weiter nach oben geführt ist.

Die Koppeleinrichtung 10 weist einen ersten Elektromotor 38 auf, der mittels einer Kette 40 mit der hohlen Gewindespindel 34 gekoppelt ist. Mittels des ersten Elektromotors 38 kann die Gewindespindel 34 gedreht werden, wodurch, wie erläutert wurde, die Reinigungslanze 24 aus dem Gehäuse 32 heraus oder in das Gehäuse 32 hinein verschoben werden kann. Mittels des ersten Elektromotors 38 kann die Reinigungslanze 24 auch gleichzeitig mit der Gewindespindel 34 um ihre Längsachse gedreht werden. Eine Drehung der Reinigungslanze 24 wird mittels einer Kulissenbahn 39 bewirkt, in die ein mit der Gewindespindel 34 verbundener Kulissenstein 41 eingreift. In einem Spülbetrieb dreht sich dadurch die Reinigungslanze 24 relativ zum Gehäuse 32 und damit auch relativ zu dem am Gehäuse 32 fixierten Kanister 12. Mittels des sich dann relativ zum Kanister 12 drehenden Sprühkopfs 26 kann die Innenwand des Kanisters 12 gründlich gereinigt werden. Insbesondere muss zur Reinigung des Kanisters 12 dieser nicht von Hand relativ zum Gehäuse 32 und dem Sprühkopf 26 verdreht werden. Dadurch besteht keine Gefahr, dass der an der Koppeleinrichtung 10 fixierte Verschluss des Kanisters 12 versehentlich aufgedreht wird und der Inhalt des Kanisters 12 unkontrolliert austritt.

Mittels des ersten Elektromotors 38 kann die Reinigungslanze 24 auch ohne Drehung um ihre Längsachse lediglich in axialer Richtung in den Kanister hinein verschoben und aus dem Kanister herausgezogen werden, beispielsweise um den Innendeckel 28 vom Kanisterverschluss zu trennen oder wieder in den Kanisterverschluss einzusetzen. Die Reinigungslanze 24 kann im Rahmen der Erfindung auch lediglich um ihre Längsachse gedreht werden, beispielsweise in einem Spülbetrieb, ohne gleichzeitig einen Vorschub der Reinigungslanze 24 in den Kanister 12 hinein oder aus diesem heraus zu bewirken. Darüber hinaus kann die Reinigungslanze 24 gleichzeitig um ihre Längsachse gedreht und in axialer Richtung verschoben werden. Die Verschiebung und Drehung der Reinigungslanze kann beispielsweise auch unmittelbar mittels Elektromotoren erfolgen, nicht notwendigerweise mittels der Gewindespindel 34 und der Kulissenbahn 39.

Ein zweiter Elektromotor 42 ist im Außengehäuse 20 angeordnet und über eine Kette 44 mit einer Klemmeinrichtung im Gehäuse 32 gekoppelt. Mittels des Elektromotors 42 kann dadurch nach dem Aufsetzen des Kanisters 12 dieser an seinem Verschluss eingeklemmt und dadurch an der Koppeleinrichtung 10 fixiert werden. Mittels des zweiten Elektromotors 42 können auch in Fig. 2 nicht erkennbare Ventilmittel geöffnet und geschlossen werden, um eine Strömungsverbindung zwischen einem Einlass der Koppeleinrichtung 10 und einem Auslass der Koppeleinrichtung 10 freizugeben oder zu verschließen. Ein Einlass der Koppeleinrichtung 10 befindet sich bei der dargestellten Ausführungsform am oberen Ende der Reinigungslanze 24. Dort sind Öffnungen angeordnet, die eine Verbindung in den Innenraum der Reinigungslanze 24 bereitstellen. Ein Auslass der Koppeleinrichtung 10 ist in Fig. 2 nicht zu erkennen. Die Ventilmittel können in nicht dargestellter Weise eine Strömungsverbindung zwischen den Öffnungen am Sprühkopf 26 der Reinigungslanze 24 und dem Auslass ermöglichen oder unterbrechen, insbesondere um Flüssigkeit aus dem Kanister zu entnehmen. Die Ventilmittel können im Rahmen der Erfindung auch unabhängig vom Elektromotor 42 betätigt werden.

Die Koppeleinrichtung 10 weist eine in Fig. 2 lediglich abschnittsweise angedeutete Wiegeeinrichtung 46 im Außengehäuse 20 auf. Die Wiegeeinrichtung 46 weist drei Haltebolzen 48 auf, die das Außengehäuse 20 mit dem Gehäuse 32 verbinden. In Fig. 2 ist lediglich einer der Haltebolzen 48 zu erkennen.

Fig. 3 zeigt die vergrößerte Einzelheit Z aus Fig. 2. Der Haltebolzen 48 ist einer von drei gleichartigen Haltebolzen 48 und ist in nicht erkennbarer Weise mit Dehnmessstreifen (DMS) versehen. Der Haltebolzen 48 ist in das Außengehäuse 20 eingeschraubt und ragt an seinem in Fig. 3 rechten Ende 50 über eine Innenwand des Außengehäuses 20 hinaus. Auf dieses Ende 50 ist das Gehäuse 32 aufgesetzt. Durch das Gewicht des Gehäuses 32 verformt sich infolgedessen der Haltebolzen 48 bzw. die drei Haltebolzen 48. Die weiteren Haltebolzen 48, die in Fig. 2 und Fig. 3 nicht erkennbar sind, sind auf gleicher Höhe wie der Haltebolzen 48, aber das Gehäuse 32 umgebend in einem Winkel von 120° zueinander beabstandet angeordnet. Das Gehäuse 32 liegt somit auf den drei Enden 50 der Haltbolzen 48 auf. Eine Verformung der Haltebolzen 48 kann mittels der Dehnmessstreifen auf den Haltebolzen 48 erfasst werden. Die in Fig. 2 und Fig. 3 lediglich schematisch angedeutete Wiegeeinheit 46 kann aus dem mittels der Dehnmessstreifen erzeugten Messsignal eine Gewichtskraft des Gehäuses 32 bestimmen.

Wie bereits erläutert wurde, wird der Kanister 12 an das Gehäuse 32 angekoppelt. Wird der Kanister 12 im vollen Zustand an die Koppeleinrichtung 10 angekoppelt und wird dann der Kanister 12 wenigstens teilweise entleert, so kann mittels der Wiegeeinrichtung 46 ein Unterschied in der Gewichtskraft des Gehäuses 32 mit dem daran angekoppelten Kanister 12 zwischen dem vollen Zustand und dem wenigstens teilweise entleerten Zustand festgestellt werden. Mittels der Wiegeeinrichtung 46 kann infolgedessen das Gewicht einer aus dem Kanister 12 entnommenen Flüssigkeitsmenge bestimmt werden.

Die Wiegeeinrichtung 46 ist mit einer Steuereinheit 52 gekoppelt, wobei die Steuereinheit 52 in Fig. 3 lediglich schematisch angedeutet ist.

Die Steuereinheit 52 und die Wiegeeinrichtung 46, wobei die Haltebolzen 48 Teil der Wiegeeinrichtung 46 bilden, sind unter einer Schutzhaube 54 der Koppeleinrichtung 10 angeordnet und dadurch vor Flüssigkeiten und Staub geschützt. Für Wartungsarbeiten ist die Schutzhaube 54 leicht abnehmbar und bietet einen guten Zugang zu den Baugruppen und eine einfache Wartung und Reparatur. Die Koppeleinrichtung 10 kann in einfacher Weise an Pflanzenschutzgeräte über vorbereitete Montagepunkte angebaut werden.

In den Fig. 1 bis 3 nicht dargestellt ist ein Schutzgehäuse der Koppeleinrichtung 10. Das Schutzgehäuse nimmt die vollständige Koppeleinrichtung 10 auf und weist einen Deckel auf, der eine Oberseite der Koppeleinrichtung 10 vor Verschmutzung schützt. Wenn ein Kanister 12 auf die Koppeleinrichtung 10 aufgesetzt werden soll, wird ein Deckel des Schutzgehäuses geöffnet und der Kanister 12 kann an die Koppeleinrichtung 10 angekoppelt werden. Wenn der Kanister 12 entleert oder teilweise entleert und gereinigt ist, wird dieser wieder von der Koppeleinrichtung 10 abgenommen und der Deckel des Schutzgehäuses kann geschlossen werden. Gerade in dem Fall, in dem die Koppeleinrichtung 10 an einer Feldspritze 14 befestigt ist, kann dadurch die Koppeleinrichtung 10 vor Verschmutzung im Sprühbetrieb und Fahrbetrieb geschützt werden.

In Fig. 3 ist abschnittsweise ein Display 56 angedeutet, das mittels der Bolzen 30 am Außengehäuse 20 befestigt ist. Das Display 56 steht mit der Steuereinheit 52 in Verbindung. Das Display ist beispielsweise als Display mit Folientastern ausgebildet, dadurch staubgeschützt, wassergeschützt und flüssigkeitsgeschützt ausgeführt und kann auch mit Schutzhandschuhen einfach bedient werden.

Am Display 56 kann beispielsweise ein manueller Modus oder ein Automatikmodus eingestellt werden, es kann eine aus dem Kanister 12 zu entnehmende Teilmenge eingegeben werden und beispielsweise kann auch eine Dichte der Flüssigkeit im Kanister 12 eingegeben werden. Im Display 56 wird der aktuelle Status der Koppeleinrichtung 10 angezeigt, beispielsweise ein Status "betriebsbereit", oder es kann auch angezeigt werden, ob gerade Flüssigkeit aus dem Kanister 12 entnommen wird oder ob bereits ein Spülbetrieb eingeschaltet ist.

Die Steuereinheit 52 kann eine drahtlose Schnittstelle aufweisen und beispielsweise mit einem mobilen Gerät, beispielsweise einem Smartphone, in Verbindung treten. Auch über eine solche mobile Einheit wie ein Smartphone kann dann die Koppeleinrichtung 10 gesteuert werden, oder mit Daten versorgt werden, indem beispielsweise Eigenschaften der Flüssigkeit im Kanister 12 zur Steuereinheit 52 übertragen werden.

Am Display 56 oder an der mobilen Einheit kann über die Steuereinheit 52 dann beispielsweise eine Reinigungszeit oder Spülzeit und/oder eine Anzahl von Reinigungszyklen eingestellt werden und es kann eine Kalibrierung der Wiegeeinrichtung 46 vorgenommen werden. Mit der mobilen Einheit, beispielsweise dem Smartphone, kann beispielsweise auch ein Code auf dem Kanister 12 erfasst werden und die sich daraus ergebenden Daten können an die Steuereinheit 52 übertragen werden. Diese Daten können dann beispielsweise auch eine Dichte der Flüssigkeit im Kanister 12 enthalten.

Alternativ oder zusätzlich ist die Koppeleinrichtung 10 mit einer Codeleseeinrichtung versehen, so dass ein am Kanister 12 angeordneter Code automatisch gelesen wird oder ein am Kanister 12 angeordneter RFID-Chip automatisch ausgelesen werden kann. Am Display 56 oder auch mittels der mobilen Einheit können auch Entnahmeaufträge übermittelt werden. Es kann auch eine Dokumentation eines Entnahmevorgangs und/oder Spülvorgangs erstellt werden und beispielsweise von der Steuereinheit 52 an die mobile Einheit übertragen werden, um Datum, Zeit, Entnahmemenge, Auftragsnummer und/oder Bediener eines Entnahmevorgangs zu dokumentieren.

Auf dem Display kann eine Anzeige über Piktogramme erfolgen und beispielsweise kann ein Inhalt des Kanisters sowie auch eine entnommene Menge in Litern oder Kilogramm angegeben werden.

Mittels der Steuereinheit 52 können aus unterschiedlichen Kanistern entnommene Teilmengen aufaddiert und gegebenenfalls übermittelt oder im Display 56 angezeigt werden. Wird beispielsweise ein erster Kanister 12 aufgesetzt und vollständig entleert und ist dann aber die gewünschte Sollmenge noch nicht erreicht, kann ein zweiter Kanister aufgesetzt, angekoppelt und teilweise entleert werden. Im Display 52 können dann die Teilmengen sowie auch die Gesamtmenge an entnommener Flüssigkeit, mit anderen Worten ein akkumuliertes Volumen, angezeigt werden.

Die Wiegeeinrichtung 46 ist für Kanistergrößen des Kanisters 12 von 1 I bis 20 I vorgesehen. Die Wiegegenauigkeit der Wiegeeinrichtung 46 kann gemäß ISO 21191 mit ± 2,5 % angegeben werden. Wird die Koppeleinrichtung 10 ausgeschaltet oder in den Standby-Modus versetzt, kann, wie bereits ausgeführt wurde, eine nicht dargestellte Fixiereinrichtung eine starre Verbindung zwischen Außengehäuse 20 und Gehäuse 32 herstellen, so dass beispielsweise im Fahrbetrieb oder Spritzbetrieb die Haltebolzen 48 der Wiegeeinrichtung 46 nicht oder nicht übermäßig belastet werden.

Die Wiegeeinrichtung 46 weist eine Tara-Funktion auf, so dass die Entnahmemenge vorgegeben werden kann. Die Wiegeeinrichtung 46 und/oder die Steuereinheit 52 können darüber hinaus einen nicht dargestellten Lagesensor aufweisen, beispielsweise einen Gyro-Lagesensor. Steht die Koppeleinrichtung 10 während des Entnehmens von Flüssigkeit aus einem Kanister 12 nicht exakt senkrecht, so kann diese Abweichung von der Senkrechten mittels des Lagesensors erfasst und bei der Auswertung der Signale der DMS-Streifen auf den Haltebolzen 48 berücksichtigt werden. Dadurch kann eine hochpräzise Messung und die bereits erwähnte hohe Wiegegenauigkeit erzielt werden.

Ein in den Figuren nicht dargestellter Verbindungsschlauch zu einer Mischeinrichtung oder einem Vorratstank ist durch eine flexible Muffe von der Wiegeeinheit 46 bzw. vom Gehäuse 20 entkoppelt, so dass eine Steifigkeit des Verbindungsschlauchs das Messergebnis der Wiegeeinheit 46 nicht beeinflusst.

Die Flüssigkeit im Kanister 12 kann mittels Schwerkraft aus dem Kanister gefördert werden, bei der dargestellten Ausführungsform ist eine Absaugung aus dem Kanister 12 mittels Unterdruck bis -1 bar vorgesehen. Der Unterdruck wird in einer nicht dargestellten Vorrichtung der Feldspritze 14 erzeugt. Ein Spülbetrieb wird mit Klarwasser bei 2 bar bis 10 bar Druck vorgenommen.

Mittels der Steuereinheit 52 kann ein automatischer Betriebsmodus der Koppeleinrichtung 10 gewählt werden, alternativ kann auch ein manueller Modus gewählt werden. Im manuellen Modus wird beispielsweise die vollständige Entleerung und anschließende Reinigung des Kanisters und des Verschlusses des Kanisters, insbesondere des Innendeckels 28 des Kanisters, vorgenommen. Die einzelnen Stadien dieses manuellen Modus können dabei über das Display 56 jeweils ausgelöst und/oder gestoppt werden, können aber auch automatisch bis zur Freigabe des gereinigten Kanisters 12 ablaufen.

In dem automatischen Betriebsmodus, insbesondere einem vollautomatischen Modus, kann beispielsweise die Vorwahl der benötigten Menge an Flüssigkeit, beispielsweise Pflanzenschutzmittel, erfolgen. Wenn die Sollmenge lediglich eine Teilmenge der im Kanister 12 befindlichen Flüssigkeit ist, wird unter Steuerung der Steuereinheit 52 aus dem Kanister 12 lediglich eine Teilmenge, die der Sollmenge entspricht, entnommen und danach wird die Außenseite des Innendeckels und des Schraubverschlusses gereinigt. Der Ablauf erfolgt dann automatisch bis zur Freigabe des gereinigten Kanisters.

Liegt die Sollmenge über dem Inhalt des Kanisters 12, erfolgt so lange eine vollständige Entleerung mehrerer Kanister, bis beim letzten Kanister eine Teilmengenentnahme erforderlich wird. Die entnommenen Teilmengen werden mittels der Steuereinheit 52 automatisch aufaddiert. Auch hier erfolgt der Ablauf automatisch bis zur Freigabe des gereinigten Kanisters.

Eine automatische Reinigung der Kanister ist vorgesehen. Die Reinigung bzw. der Spülbetrieb setzt automatisch nach der Entnahme von Flüssigkeit aus dem Kanister ein. Wird der Kanister vollständig entleert, erfolgt eine Innenreinigung des Kanisters 12 sowie der Außenseite des Innendeckels und des Schraubverschlusses. Bei einer Teilmengenentnahme wird die Außenseite des Innendeckels und des Schraubverschlusses gereinigt und nach erfolgter Reinigung wird der Kanister freigegeben.

Mittels der Reinigungslanze 24, die sich um ihre Längsachse relativ zum Gehäuse 32 drehen kann und die mittels des ersten Elektromotors 38 angetrieben ist, kann eine effiziente und schnelle Innenreinigung des Kanisters 12 erfolgen. Der Sprühkopf 26 dreht sich bei der dargestellten Ausführungsform um 180° und eine Auf- und Abwärtsbewegung des Sprühkopfs 26 relativ zum Gehäuse 32 ist möglich. Ein Drehwinkel der Reinigungslanze 24 mit dem Sprühkopf 26 und ein Verfahrweg bzw. Verschiebeweg relativ zum Gehäuse 32 ist dabei mittels der Steuereinheit 52 frei programmierbar. Auf diese Weise kann ein Reinigungsprogramm optimal an unterschiedliche Kanisterformen und -größen angepasst werden. Die Elektromotoren 38, 42 können als Schrittmotoren ausgebildet sein.

Der Sprühkopf 26 ist optimiert, so dass Problemzonen im Kanister, wie Kanisterhals, Kanisterboden und Kanisterrippung, erreicht und gründlich gesäubert werden. Ein großer Impact der aus dem Sprühkopf 26 austretenden Sprühstrahlen sorgt für eine gründliche Kanisterbodenreinigung, beispielsweise zum Ablösen von Bodensediment. Eine Dauer des Spülvorgangs ist dabei wählbar und kann an den Grad der Rückstände im Kanister angepasst werden.

Mit der erfindungsgemäßen Koppeleinrichtung können folgende vollständig automatisch ablaufende Prozessschritte nach dem Aufsetzen des Kanisters auf die Koppeleinrichtung 10 erfolgen:
Zunächst wird der Kanister 12 von Hand auf die Koppeleinrichtung 10 aufgesetzt und dann mittels Drehung des zweiten Elektromotors 42 an der Koppeleinrichtung 10 fixiert.

Nachfolgend wird mittels Drehung des ersten Elektromotors 38 die Reinigungslanze 24 nach oben, in Richtung auf den Kanister 12 zubewegt, wodurch der Innendeckel 28 des Kanisterverschlusses abgehoben und zusammen mit der Reinigungslanze 24 in den Innenraum des Kanisters 12 hineinbewegt wird.

Es kann dann eine vollständige Entleerung des Kanisters 12 erfolgen, indem mittels des zweiten Elektromotors 42 die Ventilmittel eine Strömungsverbindung zwischen dem Einlass der Koppeleinrichtung 10 und dem Auslass der Koppeleinrichtung 10 freigeben. Anschließend an eine vollständige Entleerung des Kanisters 12 erfolgt dessen Innenreinigung und nach der Innenreinigung des Kanisters 12 auch die Reinigung des Schraubverschlusses sowie der Außenseite des Innendeckels 28 des Kanisters 12.

Wird lediglich eine Teilmenge der Flüssigkeit im Kanister 12 entnommen, erfolgt nach dem Schließen des Innendeckels 28 des Kanisters 12 die Reinigung der Außenseite des Innendeckels und des Schraubverschlusses des Kanisters.

Nach der jeweils erfolgten Reinigung wird der Kanister mittels des Innendeckels 28 verschlossen und mittels des zweiten Elektromotors wird die Fixierung des Kanisters 12 an der Koppeleinrichtung 10 aufgehoben. Der Kanister 12 kann dann von der Koppeleinrichtung 10 abgehoben werden.

Eine Spannungsversorgung der 12 V-Elektromotoren 38, 42 und der Wiegeeinrichtung 46 sowie der Steuereinheit 42 erfolgt über eine Spannungsversorgung von 12 V bis 24 V über eine Kabelverbindung und Steckverbindung. Beispielsweise wird eine Spannungsversorgung der Feldspritze 14 verwendet.

Die Koppeleinrichtung 10 weist einen separaten Wasseranschluss für Spülwasser auf. Ein separater Verbindungsschlauch führt zu einer Mischeinrichtung oder zu einem Vorratstank der Feldspritze 14.

Mit der erfindungsgemäßen Koppeleinrichtung können die Arbeitsabläufe beim Ankoppeln, Entleeren, Reinigen und Abkoppeln eines Kanisters, insbesondere eines Kanisters mit Pflanzenschutzmittel, automatisch vorgenommen werden. Dadurch werden Bedienungsfehler und sich hieraus ergebende Gefährdungen von Umwelt und Bediener weitgehend vermieden.

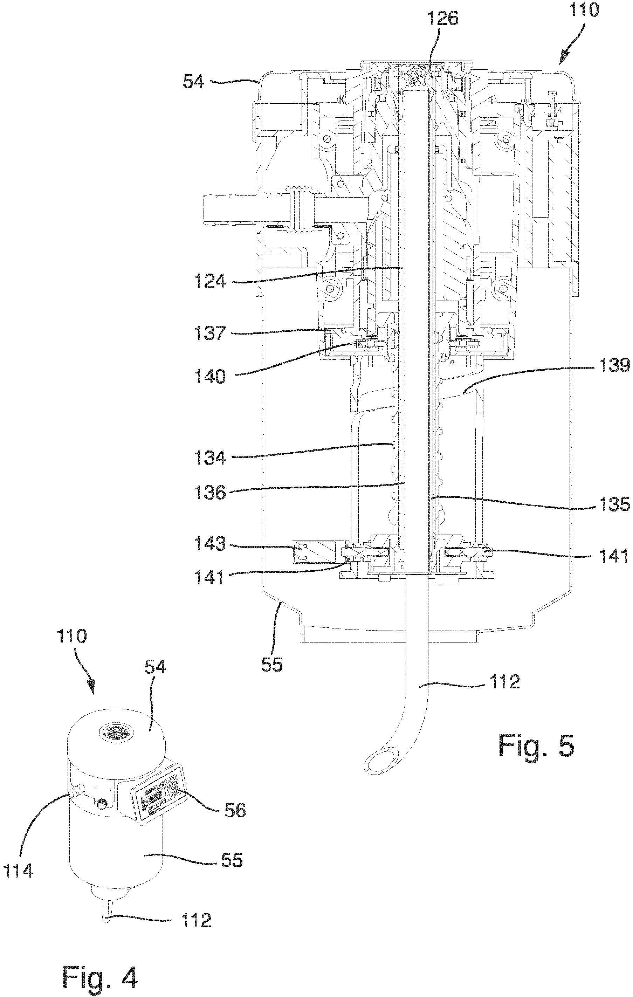

Fig. 4 zeigt eine erfindungsgemäße Koppeleinrichtung 110 gemäß einer weiteren Ausführungsform der Erfindung von schräg oben. Die Koppeleinrichtung 110 ist ähnlich zur Koppeleinrichtung 10 der Fig. 1 bis 3 aufgebaut, so dass lediglich die sich unterscheidenden Merkmale beschrieben werden.

In Fig. 4 ist das Display 56 zu erkennen, über das ein Bediener die Koppeleinrichtung 110 bedienen und beispielsweise vollautomatische Abläufe auslösen kann.

Die Koppeleinrichtung 110 ist in Fig. 4 mit der Schutzhaube 54 versehen. Weiter ist im Bereich unterhalb des Displays 56 ein Schutzgehäuse 55 zu erkennen. Über einen Schlauch 112 wird der Koppelvorrichtung 110 Wasser, beispielsweise aus einem Wassertank einer Feldspritze, zugeführt, um den in Fig. 4 nicht dargestellten Kanister 12, siehe Fig. 1, spülen zu können.

Über einen Anschluss 114 wird aus dem Kanister 12, siehe Fig. 1, entnommene Flüssigkeit, beispielsweise Pflanzenschutzmittel, aus der Koppeleinrichtung 110 abgeführt.

Fig. 5 zeigt eine Schnittansicht der Koppeleinrichtung 110 der Fig. 4. Zu erkennen ist eine Gewindespindel 134, innerhalb der ein Belüftungsrohr oder Innenrohr 136 bis zu dem Sprühkopf 126 geführt ist. Über das Innenrohr 136 wird beim Entnehmen von Flüssigkeit aus einem Kanister 12 dem Innenraum des Kanisters 12 Luft zugeführt, um den Kanister 12 zu entlüften. Der Schlauch 112 ist nicht mit dem Innenrohr 136 verbunden. Vielmehr ist der Schlauch 112, über den Wasser zum Spülen des Kanisters zugeführt wird, mit einem Ringraum 135 zwischen einer Innenseite der Gewindespindel 134 und einer Außenseite des Innenrohrs 136 verbunden. Über diesen Ringraum wird Wasser aus dem Schlauch 112 bis zum Sprühkopf 126 geführt.

Das Innenrohr 136 ist an seinem unteren Ende zur Umgebung hin offen.

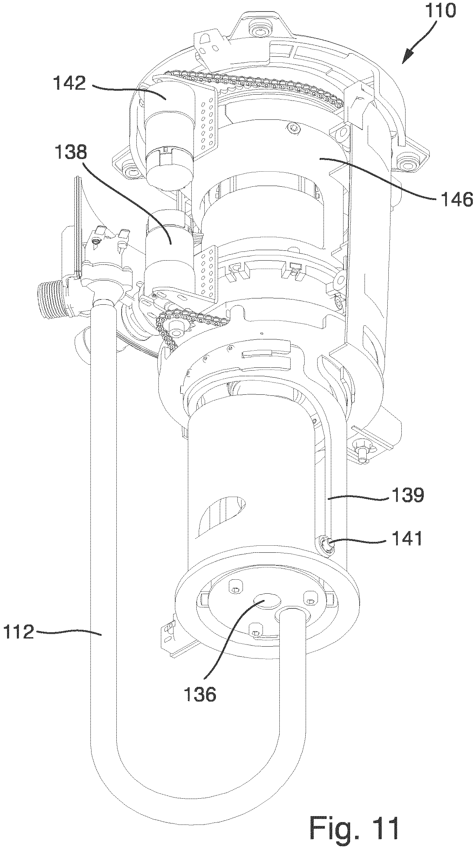

In der Schnittansicht der Fig. 5 sind die Elektromotoren zum Verschieben und Drehen der Reinigungslanze 124 nicht zu erkennen. Die Gewindespindel 134 ist aber in einer Gewindemutter 138 aufgenommen, die wiederum mit einem Kettenzahnrad versehen ist, das mittels einer Kette 140 von einem der beiden Elektromotoren 138 angetrieben wird, siehe Fig. 11. Eine Drehung der Gewindemutter 137 führt ausgehend vom Zustand der Fig. 5 zu einer Bewegung der Gewindespindel 134 nach oben. An ihrem unteren Ende ist die Gewindespindel mit einem Endstück verbunden, das mittels zweier Kulissensteine 141 in eine Kulissenbahn 139 eingreift. Die Kulissenbahn 139 ist in einem Hohlzylinder vorgesehen. Die Kulissensteine 141 sind als Drehlager, insbesondere Kugellager, ausgebildet. An dem Endstück ist ein elektrischer Encoder 143 vorgesehen. Mittels des Encoders wird eine Position des Endstücks an eine in Fig. 5 nicht dargestellte Steuereinheit übermittelt. Sobald von dem Encoder 143 ein Signal zur Steuereinheit gesandt wird, dass das Endstück bzw. die Gewindespindel 134 in einer vorgesehenen Endposition oder vorgesehenen Zwischenposition angelangt ist, wird der Elektromotor 138 gestoppt, der als Schrittmotor ausgebildet ist.

Der Elektromotor 138 dreht somit die Gewindemutter 137 und bewegt dadurch die Gewindespindel 134 nach oben bzw. unten. Eine Verschiebebewegung der Gewindespindel 134 wird über die Steigung des Außengewindes der Gewindespindel 134 sowie zusätzlich auch über den Verlauf der Kulissenbahn 139 bestimmt. Es ist in Fig. 5 zu erkennen, dass ausgehend von einem unteren Ende der Kulissenbahn 139, in dem in Fig. 5 die Kulissensteine 141 angeordnet sind, die Reinigungslanze 124 bei Drehung des Elektromotors zunächst geradlinig nach oben verschoben wird. Dadurch kann mittels der Reinigungslanze 124, wie anhand der Fig. 1 bis 3 beschrieben wurde, ein Innendeckel 28 des Kanisters 12 abgehoben werden und die Reinigungslanze kann im Innenraum des Kanisters positioniert werden, vgl. Fig. 1, um Flüssigkeit aus dem Kanister 12 zu entnehmen. Wird der Kanister 12 beim Entnehmen von Flüssigkeit nur teilweise entleert, dreht der Elektromotor 138 die Gewindemutter 137 in entgegengesetzter Richtung, so dass die Gewindespindel 134 wieder nach unten bewegt wird, bis der Innendeckel des Kanisterverschlusses wieder geschlossen ist.

Ist der Kanister vollständig entleert, wird mittels des Elektromotors 138 die Mutter 137 weiter in Drehung versetzt, so dass sich die Kulissensteine 141 weiter entlang der Kulissenbahn 139 bewegen und in den wendelförmigen Abschnitt der Kulissenbahn 139 gelangen. Bei nur noch geringem Vorschub wird dadurch die Reinigungslanze und insbesondere der Sprühkopf 126 der Reinigungslanze innerhalb des Kanisters gedreht. Gleichzeitig wird über den Schlauch 112 Spülwasser zugeführt, so dass der Innenraum des Kanisters gespült werden kann. Nach Abschluss der Reinigung des Kanisters wird mittels des Elektromotors 138 die Gewindemutter 137 in der Gegenrichtung gedreht, so dass sich die Gewindespindel 134 zusammen mit der Reinigungslanze 124 wieder entlang des wendelförmigen Abschnitts der Kulissenbahn 139 zurückdreht und dann mittels des folgenden geradlinigen Abschnitts der Kulissenbahn 139 wieder nach unten zurückgezogen wird, bis die Kulissensteine 141 und die Reinigungslanze 124 die in Fig. 5 dargestellte Position erreicht haben, in der auch der Innendeckel des Kanisterverschlusses wieder geschlossen ist.

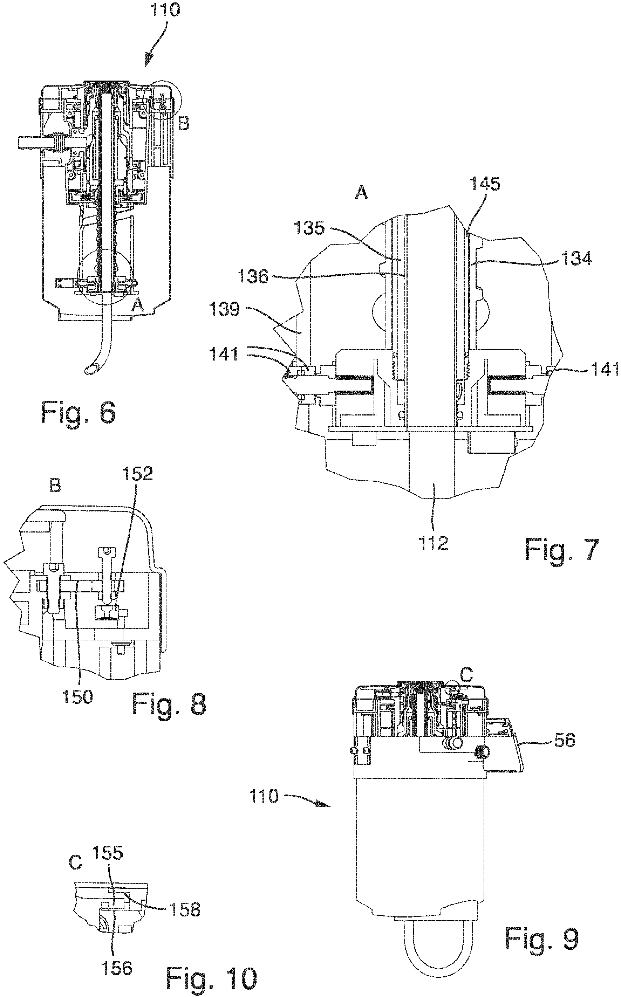

Fig. 6 zeigt die Schnittansicht der Fig. 5 erneut in verkleinertem Maßstab, wobei zwei Einzelheiten A, B jeweils mittels einer Kreislinie eingezeichnet sind.

Die Einzelheit A aus Fig. 6 ist vergrößert in Fig. 7 dargestellt. Zu erkennen ist das Endstück, mit dem die Gewindespindel 134 verbunden ist, sowie abschnittsweise die als Kugellager ausgebildeten Kulissensteine 141, die in die ebenfalls nur abschnittsweise dargestellte Kulissenbahn 139 eingreifen.

Zu erkennen ist in Fig. 7 weiter der Ringraum 135 zwischen einer Innenseite der Gewindespindel 134, wobei die Innenseite der Gewindespindel 134 noch mit einer Auskleidung 145 versehen ist, und der Außenseite des Innenrohrs 136. In diesem Ringraum 135 wird Spülwasser, das über den Schlauch 112 zugeführt wird, zum Sprühkopf 126 befördert. Das Innenrohr 136 dient, wie bereits erläutert wurde, der Entlüftung des Kanisters 12 beim Entnehmen von Flüssigkeit.

Fig. 8 zeigt die Einzelheit B aus Fig. 6. Die Koppeleinrichtung 110 weist eine in Fig. 5 und Fig. 6 lediglich abschnittsweise erkennbare Wiegeeinrichtung auf, wobei diese Wiegeeinrichtung prinzipiell bereits anhand der Ausführungsform der Koppeleinrichtung 10 der Fig. 1 bis 3 erläutert wurde. Die Wiegeeinrichtung weist einen Rahmen, ein Gehäuse oder ein Chassis mit sich radial nach außen erstreckenden Kranarmen 150 auf. Diese Kranarme sind im Bereich ihres radial äußeren Endes, siehe Fig. 8, an Gummipuffern 152 gelagert. Diese Gummipuffer 152 sind zum Abfedern von Vibrationen während des Wiegevorgangs vorgesehen, beispielsweise zum Abfedern von Vibrationen, die durch einen Pumpenbetrieb während des Wiegevorgangs und somit während des Entnehmens von Flüssigkeit aus dem Kanister 12 auftreten.

Die Wiegeeinrichtung weist vorzugsweise drei Kranarme 150 auf, die jeweils um 120° voneinander beabstandet sind und radial nach außen vorragen.

Fig. 9 zeigt eine Teilschnittansicht der Koppelvorrichtung 110 der Fig. 5. Geschnitten ist lediglich der obere Abschnitt der Koppeleinrichtung 110, wobei die Schnittebene in Fig. 9 anders verläuft als in Fig. 5 und 6 und insbesondere durch das Display 56 verläuft, vgl. auch Fig. 4. In Fig. 9 ist eine Kreislinie eingezeichnet und mit C bezeichnet. Die Einzelheit C aus Fig. 9 ist in Fig. 10 vergrößert dargestellt.

Fig. 10 zeigt, dass das Chassis, das Gehäuse oder der Rahmen der Wiegeeinrichtung weiter mit einem Abschnitt 155 versehen ist. Der Abschnitt 155 ragt radial nach außen vor und ist zwischen einem ersten Anschlag 156 und einem zweiten Anschlag 158 am Außengehäuse aufgenommen. Der Abschnitt 155 ist dabei im Abstand von dem in Fig. 10 unteren Anschlag 156 und auch im Abstand von dem in Fig. 10 oberen zweiten Anschlag 158 angeordnet. Die Anschläge 156, 158 beeinflussen eine geringfügige Bewegung des Rahmens der Wiegeeinheit und damit des Abschnitts 155 während eines Wiegevorgangs nicht. Wie bereits anhand der Fig. 1 bis 3 erläutert wurde, erfolgt eine Messung der Wiegeeinrichtung dadurch, dass Haltebolzen mit DMS-Streifen geringfügig verformt bzw. entlastet werden. Eine solche Bewegung des Rahmens der Wiegeeinrichtung beinträchtigen die Anschläge 156, 158 nicht, da sie im Abstand von dem Abschnitt 155 angeordnet sind.

Lediglich im Fahrbetrieb einer Feldspritze oder bei größeren Erschütterungen der Koppeleinrichtung 110 kann es zu stärkeren Verformungen bzw. zeitweisen Biegungen der Haltebolzen der Wiegeeinrichtung kommen, so dass sich der Rahmen der Wiegeeinrichtung stärker auf- und abbewegt, als dies im Wiegebetrieb der Fall ist. In einem solchen Fall können die Abschnitte 155 dann an dem ersten Anschlag 156 oder dem zweiten Anschlag 158 anschlagen, so dass eine übermäßige Biegung der Haltebolzen mit den DMS-Streifen vermieden wird. Dadurch wird eine plastische Verformung der Haltebolzen mit den DMS-Streifen zuverlässig verhindert. Eine solche dauerhafte oder plastische Verformung der Haltebolzen würde das Messergebnis der Wiegeeinrichtung beeinflussen.

Fig. 11 zeigt die Koppeleinrichtung 110 der Fig. 5 im nicht geschnittenen Zustand von schräg oben und bei abgenommener Schutzhaube 54 und abgenommenem unteren Schutzgehäuse 55.

Zu erkennen ist in Fig. 11, dass der Schlauch 112 zum Zuführen von Spülwasser nicht konzentrisch an dem Endstück am unteren Ende der Gewindespindel 134 mündet, sondern seitlich hierzu. Zentrisch am Endstück ist das offene Ende des Innenrohrs 136 zu erkennen. Wird das Endstück zusammen mit der Gewindespindel nach oben bewegt, kann der Schlauch 112 folgen, da er über seine in Fig. 11 zu erkennende U-Form eine ausreichende Länge hierfür hat.

Zu erkennen ist in Fig. 11 weiter der Hohlzylinder mit der Kulissenbahn 139 sowie einer der Kulissensteine 141.

Mittels des Elektromotors 138 wird, wie bereits anhand der Fig. 5 erläutert wurde, eine Verschiebebewegung und Drehbewegung der Reinigungslanze 124 bewirkt und gesteuert.

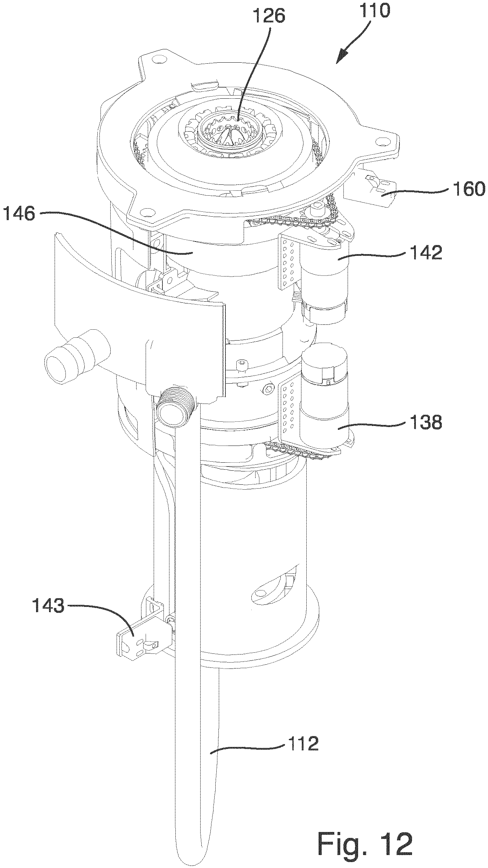

Fig. 11 lässt einen zweiten Elektromotor 142 erkennen, der im oberen Bereich der Koppeleinrichtung 110 vorgesehen ist. Der Elektromotor 142 treibt über eine Kette ein Zahnrad an, mittels dem ein Kanister 12, siehe Fig. 12, an- und abgekoppelt werden kann. Nach dem händischen Aufsetzen des Kanisters 12 wird, wie bereits beschrieben wurde, der Elektromotor 142 in Drehung versetzt und eine geeignete Rasteinrichtung wird mittels der Kette und des Zahnrads gedreht, um den Kanister 12 sicher und flüssigkeitsdicht an der Koppeleinrichtung 110 zu arretieren.

Mittels des zweiten Elektromotors 142 können auch Ventile zum Entnehmen von Flüssigkeit aus dem Kanister angesteuert werden. Das Ansteuern der Ventile kann im Rahmen der Erfindung aber auch separat, beispielsweise mittels einer zentralen Steuereinheit, die auch die Elektromotoren 138, 142 und die Wiegeeinrichtung steuert, bewirkt werden. Eingesetzt werden können beispielsweise Elektroventile, Magnetventile oder dergleichen.

Fig. 12 zeigt die Koppeleinrichtung 110 der Fig. 11 in einer Ansicht von schräg oben. Zu erkennen ist das obere Ende des Sprühkopfs 126 der Reinigungslanze 124, vgl. Fig. 5. Ebenfalls zu erkennen ist der elektrische Encoder 143, der der Steuereinheit ein Signal liefert, in welcher Position sich die Reinigungslanze 124 relativ zum Außengehäuse der Koppeleinrichtung 110 befindet. Ein weiterer Encoder 160 ist im oberen Bereich der Koppeleinrichtung 110 zu erkennen. Mittels des Encoders 160 wird eine Stellung der Verriegelungseinrichtung für den Kanister an eine Steuereinheit gemeldet, um mittels der Steuereinheit den zweiten Elektromotor 142 geeignet ansteuern zu können.

Fig. 12 und Fig. 11 lassen auch einen Teil des Rahmens oder Gehäuses der Wiegeeinheit 146 erkennen. Die Wiegeeinheit 146 wurde bereits erläutert, insbesondere anhand der Ausführungsform der Koppeleinrichtung 10 der Fig. 1 bis 3.

Um mittels der Koppeleinrichtung 110 Flüssigkeit, beispielsweise Pflanzenschutzmittel, aus einem Kanister 12 zu entnehmen, setzt der Anwender den Kanister mit dem Verschlussdeckel auf die Koppeleinrichtung 110 auf. Mittels der Wiegeeinrichtung 146 wird dann das Anfangsgewicht gemessen. Über das Display 56, siehe Fig. 4, gibt der Anwender die zu entnehmende Flüssigkeitsmenge ein. Gegebenenfalls gibt der Anwender die Zielmenge an Flüssigkeit in Litern oder Millilitern ein. Die Steuereinheit berechnet dann aus der Zielmenge und einer ebenfalls einzugebenden Dichte oder einer automatisch eingelesenen oder in der Steuereinheit bekannten Dichte der Flüssigkeit, welches Gewicht in Kilogramm die gewünschte Zielmenge hat.

Die Ventile zum Entnehmen von Flüssigkeit aus dem Kanister 12 werden dann geöffnet, während die Wiegeeinrichtung 146 weiterhin das Gewicht des Kanisters 12 bzw. die Gewichtsdifferenz zwischen dem gemessenen Anfangsgewicht und dem aktuellen Gewicht erfasst. Ein Herantasten an die gewünschte Zielmenge kann dann durch Öffnen und Schließen des Entnahmeventils erfolgen, gegebenenfalls auch mit sich beim Annähern an die Zielmenge kleiner werdenden Zeitabständen zwischen Öffnen und Schließen des Ventils. Nach dem Erreichen der gewünschten Zielmenge, wobei die Zielmenge dadurch erreicht ist, dass die Wiegeeinrichtung 146 das vorher berechnete Gewicht der Zielmenge als Gewichtsdifferenz zwischen dem Anfangsgewicht und dem aktuellen Gewicht erfasst, wird dann das Entnahmeventil geschlossen.

Anschließend wird die Reinigungslanze 124 in die in Fig. 12 dargestellte Stellung zurückgezogen, so dass der Innendeckel des Kanisterverschlusses verschlossen wird. Die Außenseite des Deckels des Kanisters 12 kann dann gespült werden. Nach erfolgter Spülung gibt die Steuereinheit mittels des zweiten Elektromotors 142 die Verriegelung des Kanisters an der Koppeleinrichtung 110 frei und der Anwender kann den Kanister wieder abnehmen.

Die beschriebenen Vorgänge laufen nach dem Aufsetzen des Kanisters und der Eingabe der gewünschten Zielmenge vollautomatisch ab.

Alternativ wird nach dem Aufsetzen des Kanisters am Display 56 eingegeben, dass die komplette Entnahme des Kanisterinhalts vorgesehen ist und infolgedessen kein Dosieren erfolgen soll. Nachdem der Kanister leer ist, was mittels der Wiegeeinrichtung 146 dadurch erfasst wird, dass sich trotz offenem Entnahmeventil keine Gewichtsdifferenz mehr aus aufeinanderfolgenden Wiegevorgängen ergibt, erfolgt eine automatische Reinigung des Innenraums des Kanisters mittels des Sprühkopfs 126 sowie dann auch, wie bereits beschrieben wurde, eine Reinigung der Außenseite des Verschlusses des Kanisters. Nach der Reinigung des Kanisters wird dann die Verriegelung des Kanisters wieder freigegeben.

Ist eine eingegebene Zielmenge so groß, dass sie den Inhalt eines Kanisters überschreitet, wird ein auf die Koppeleinrichtung 110 aufgesetzter Kanister vollständig entleert, dann gereinigt und im Bereich der Außenseite seines Behälterdeckels gespült und wieder freigegeben. Die Steuereinheit behält dabei die aus dem Kanister entnommene Teilmenge und zeigt diese beispielsweise auf dem Display an. Mittels des Displays kann der Anwender dann aufgefordert werden, einen weiteren Kanister aufzusetzen, aus dem dann vollautomatisch lediglich eine Teilmenge entnommen wird. Wenn die Zielmenge dann erreicht ist, wird der letzte Kanister, aus dem lediglich eine Teilmenge entnommen wurde, in der beschriebenen Art und Weise verschlossen und im Bereich der Außenseite seines Verschlusses gespült und dann wieder freigegeben.

Mit der erfindungsgemäßen Koppeleinrichtung 110 wird eine Kontaminierung eines Anwenders weitgehend vermieden und Fehldosierungen, insbesondere von Pflanzenschutzmittel, werden ebenfalls vermieden.

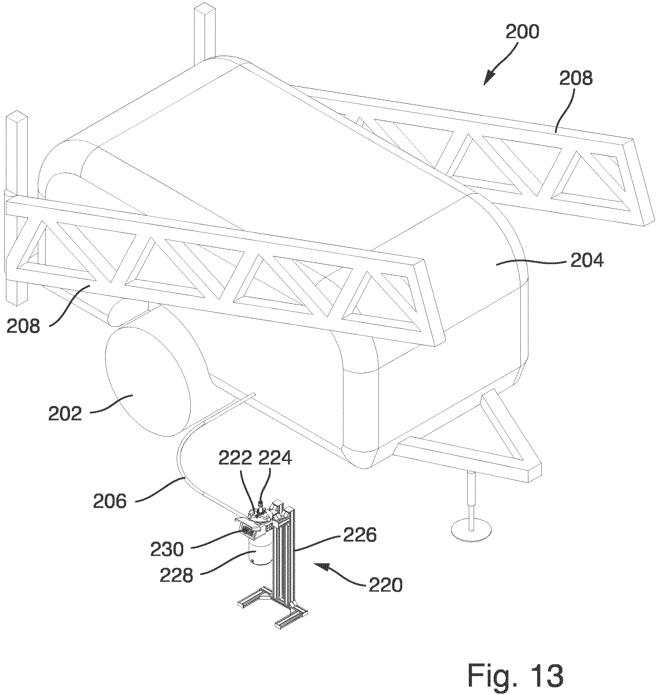

Fig. 13 zeigt eine Feldspritze 200 mit einer erfindungsgemäßen Koppeleinrichtung 220. Die Feldspritze 200 ist als Anhänger für ein Zugfahrzeug vorgesehen und weist zwei Räder 202 auf, von denen lediglich eines zu erkennen ist. Im Rahmen der Erfindung kann anstelle der dargestellten angehängten Feldspritze, mit anderen Worten einer Anhängespritze, eine angebaute Feldspritze, mit anderen Worten eine Anbauspritze, oder auch eine selbstfahrende Feldspritze, mit anderen Worten ein Selbstfahrer, vorgesehen sein. Allgemein kann die erfindungsgemäße Koppeleinrichtung im Zusammenhang mit einem Pflanzenschutzgerät eingesetzt werden. Die Feldspritze 200 weist weiter einen Vorratstank 204 und eine nicht dargestellte Mischeinrichtung auf. Eine Flüssigkeitsleitung 206 führt von der Koppeleinrichtung 220 zu der nicht dargestellten Mischeinrichtung und dem Vorratstank 204. Die Feldspritze 200 weist weiter ausklappbare Sprüharme 208 auf, an denen nicht dargestellte Sprühdüsen angeordnet sind. Eine Flüssigkeit im Vorratstank 204 kann mittels einer nicht dargestellten Pumpe zu den Sprühdüsen an den Sprüharmen 208 gefördert und dann im Fahrbetrieb über einer Bodenfläche ausgebracht werden. Die Pumpe oder eine zusätzliche Pumpe dient auch dazu, Flüssigkeit von der Koppeleinrichtung zur Mischeinrichtung und/oder dem Vorratstank zu fördern und um Spülflüssigkeit von dem Vorratstank 204 oder einem separaten Tank zur Koppeleinrichtung 220 zu fördern. Die Koppeleinrichtung 220 ist bei der dargestellten Ausführungsform nicht an der Feldspritze 200 angeordnet. Im Rahmen der Erfindung kann die Koppeleinrichtung 220 aber auch an einem Rahmen der Feldspritze oder einem Rahmen eines sonstigen Fahrzeugs befestigt sein.

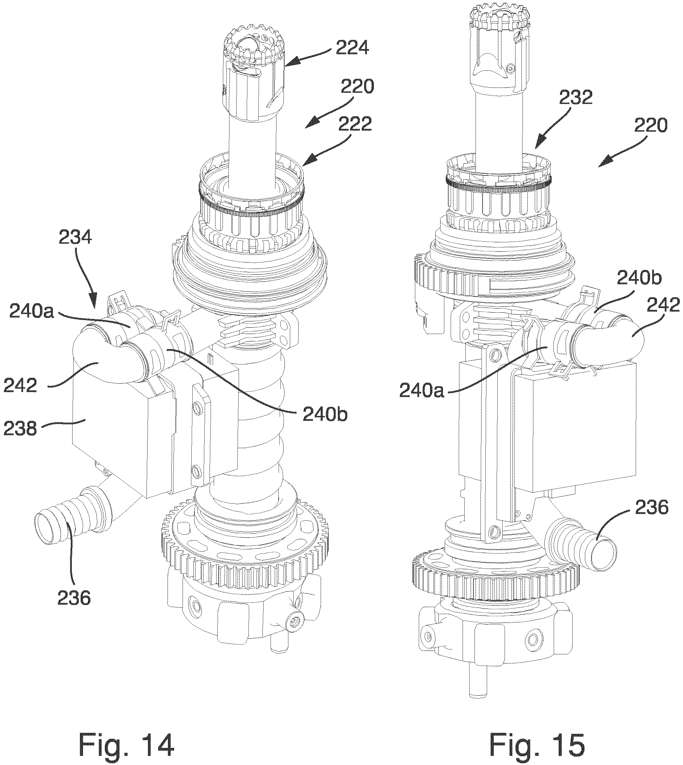

Die Koppeleinrichtung 220 bildet einen Teil eines geschlossenen Transfersystems für Pflanzenschutzmittel und/oder Flüssigdünger. Ein Kanister, wie er beispielsweise in Fig. 1 dargestellt ist, ist mit Pflanzenschutzmittel gefüllt und weist einen Innendeckelverschluss auf. Der Kanister wird mit dem Innendeckelverschluss auf die Koppeleinrichtung 220 aufgesetzt und durch einen Einlass 222 mit der Koppeleinrichtung 220 verbunden. Eine Reinigungslanze 224 wird dann in das Innere des Kanisters geschoben, was bereits erläutert wurde, und öffnet dadurch den Innendeckelverschluss des Kanisters. Eine Auslassöffnung des Kanisters ist dadurch offen und mit dem Einlass 222 der Koppeleinrichtung 220 verbunden. Der Einlass 222 ist ringförmig ausgebildet und liegt zwischen der ringförmigen Haltevorrichtung für die Auslassöffnung des Kanisters und dem Außenumfang der Reinigungslanze 224. Der Innendeckelverschluss des Kanisters wird mittels der Reinigungslanze 224 nach oben, in das Innere des Kanisters hinein, bewegt. In dem Zustand der Fig. 14 wäre die Auslassöffnung des Kanisters somit offen, allerdings sind weder der Kanister noch der Innendeckelverschluss in Fig. 14 dargestellt. Der Einlass 222 steht in Strömungsverbindung mit einem in Fig. 13 nicht erkennbaren Auslass der Koppeleinrichtung 220, wobei Ventilmittel zum Öffnen und Verschließen einer Strömungsverbindung vom Einlass zum Auslass vorgesehen sind. Der Auslass der Koppeleinrichtung 220 ist wiederum mit der Flüssigkeitsleitung 206 verbunden, die über eine nicht dargestellte Pumpe zu einer Mischeinrichtung und/oder dem Vorratstank 204 führt.

Mittels der Koppeleinrichtung 220 wird dem Kanister Pflanzenschutzmittel entnommen und über die Flüssigkeitsleitung 206 der Mischeinrichtung und dem Vorratstank 204 zugeführt.

Wenn der Kanister vollständig entleert ist oder die gewünschte Teilmenge an Pflanzenschutzmittel entnommen wurde, wird die Reinigungslanze 204 zurückgezogen und schließt dadurch gleichzeitig den Innendeckelverschluss des Kanisters. Der Kanister kann dann, beispielsweise wenn er nur teilweise entleert wurde, freigegeben und im bereits verschlossenen Zustand wieder von der Koppeleinrichtung 220 abgenommen werden. Es ist vorgesehen, dass eine Außenseite des Innendeckelverschlusses vor dem Abnehmen des Kanisters mit Spülflüssigkeit automatisch gereinigt wird.

Wurde der Kanister vollständig entleert, so kann mittels der Reinigungslanze 224 im noch eingeschobenen Zustand die Innenseite des Kanisters gereinigt werden. Hierzu ist die Reinigungslanze 224 nicht nur in den Innenraum des Kanisters einschiebbar, sondern auch noch relativ zum Innenraum des Kanisters drehbar. Eine Spülflüssigkeit, in den allermeisten Fällen Wasser, kann über die Flüssigkeitsleitung 206 zugeführt und auch wieder abgeführt werden. Wenn der Innenraum des Kanisters gereinigt ist, wird die Reinigungslanze 224 zurückgezogen und verschließt dadurch gleichzeitig den Innendeckelverschluss. Im zurückgezogenen Zustand der Reinigungslanze 224 und wenn der Innendeckelverschluss des Kanisters bereits geschlossen ist, der Kanister aber noch an der Koppeleinrichtung 220 gehalten ist, kann dann noch die Außenseite oder Unterseite, also die dem Innenraum des Kanisters abgewandte Seite des Innendeckelverschlusses, mit der Reinigungslanze 204 gereinigt werden. Nach vollständiger Reinigung des vollständig entleerten Kanisters wird dieser von der Koppeleinrichtung 220 freigegeben und kann von der Koppeleinrichtung 220 abgenommen werden.

Im Rahmen der Erfindung erfolgt nach dem Aufsetzen des Kanisters auf die Koppeleinrichtung 220 das Öffnen des Kanisters, das Entnehmen von Flüssigkeit aus dem Kanister, gegebenenfalls das Spülen des Innenraums des Kanisters sowie des Innendeckelverschlusses, das Verschließen des Innendeckelverschlusses sowie das Freigeben des Kanisters automatisch und gemäß dem Ablauf eines Softwareprogramms auf einer nicht dargestellten Steuereinheit. Der Kanister muss von einem Bediener lediglich auf die Koppeleinrichtung aufgesetzt und nach dem Freigeben des Kanisters wieder von der Koppeleinrichtung abgenommen werden. Mögliche Fehlerquellen durch menschliche Bedienung sind gemäß der Erfindung dadurch ausgeschlossen.

Die Koppeleinrichtung 220 weist einen Rahmen 226 auf, der bei der dargestellten Ausführungsform auf dem Boden steht und mit einem Gehäuse 228 der Koppeleinrichtung 220 verbunden ist. Anstelle des Rahmens 226 kann, wie bereits ausgeführt wurde, das Gehäuse 228 auch mit einem Rahmen der Feldspritze 200 verbunden sein.

Der prinzipielle Aufbau der Koppeleinrichtung 220 wurde bereits anhand der Fig. 1 bis 12 erläutert, worauf verwiesen wird.

In Fig. 13 noch zu erkennen ist ein Display 230 der Koppeleinrichtung 220. Das Display ist mit einer Anzeigeeinrichtung und mit Eingabeeinrichtungen versehen, so dass beispielsweise ein Programmablauf an dem Display 230 gestartet und gegebenenfalls abgebrochen werden kann. Ein vergleichbares Display wurde bereits anhand der Fig. 4 gezeigt und erläutert.

Die Koppeleinrichtung 220 ist, wie ebenfalls bereits erörtert wurde, mit einer Wiegeeinrichtung versehen, um das Gewicht eines auf die Koppeleinrichtung aufgesetzten Kanisters zu erfassen. Über das Gewicht des angekoppelten Kanisters kann mittels einer über das Display 230 eingegebenen oder in sonstiger Weise eingelesenen oder bekannten Dichte des Pflanzenschutzmittels eine aus dem Kanister entnommene Füllmenge an Pflanzenschutzmittel und/oder Flüssigdünger bestimmt werden. Die Anforderungen an die Präzision einer solchen Wiegeeinrichtung sind extrem hoch. Störend wirkt sich dabei aus, dass eine Pumpe der Feldspritze 200 über die Flüssigkeitsleitung 206 Vibrationen, Schwingungen und Stöße auf die Koppeleinrichtung 220 überträgt. Selbst wenn die Flüssigkeitsleitung 206 als flexible Leitung ausgeführt ist, was in der Regel der Fall sein wird, werden dennoch, auch über die in der Flüssigkeitsleitung 206 enthaltene Flüssigkeit, Vibrationen, Stöße und Schwingungen auf die Koppeleinrichtung 220 übertragen. Wenn die Koppeleinrichtung 220 unmittelbar an der Feldspritze 200 befestigt ist, kann die Übertragung von Vibrationen, Schwingungen und Stößen auch auf direktem Wege, also nicht nur über die Flüssigkeitsleitung 206, erfolgen.

Damit solche Vibrationen, Stöße und Schwingungen das Messergebnis der Wiegeeinrichtung nicht beeinflussen, ist wenigstens eine flexible Muffe in einer Strömungsverbindung zwischen dem Einlass der Koppeleinrichtung 220, wobei der Einlass mit dem Kanister verbunden ist, und dem Auslass der Koppeleinrichtung 220, der mit der Flüssigkeitsleitung 206 verbunden ist, vorgesehen. Mittels wenigstens einer flexiblen Muffe in der Strömungsverbindung zwischen dem Einlass und dem Auslass kann eine weitgehende mechanische Entkopplung erzielt werden, so dass Schwingungen, Vibrationen und Stöße von der Flüssigkeitsleitung 206 nicht auf die Wiegeeinrichtung der Koppeleinrichtung 220 übertragen werden.

Auf diese Weise ist es möglich, mit der Wiegeeinrichtung hochpräzise das Gewicht des Kanisters im angekoppelten Zustand zu erfassen. Erzielt werden kann dabei eine Abweichung des Messergebnisses, die deutlich unter den Werten der einschlägigen Norm ISO 21191 liegt.

Fig. 14 zeigt eine teilweise Darstellung der erfindungsgemäßen Koppeleinrichtung 220. Nicht dargestellt sind beispielsweise das Gehäuse 228, das Display 230 sowie auch der Rahmen 226.

Zu erkennen ist der ringförmige Einlass 222, an den die Auslassöffnung eines Kanisters angekoppelt wird und über den Flüssigkeit aus dem Kanister entnommen wird. Die entnommene Flüssigkeit wird dann über eine Flüssigkeitsleitung 234 bis zu dem Auslass 236 geführt, der, wie bereits erläutert wurde, mit der Flüssigkeitsleitung 206, siehe Fig. 13, verbunden ist. Eine Strömungsverbindung zwischen dem Einlass 222 und dem Auslass 236 kann mittels Ventilmitteln 238 abgesperrt und freigegeben werden, die in Fig. 14 und Fig. 15 lediglich als Box dargestellt sind.

Durch den Einlass 222 hindurchgeschoben werden kann die Reinigungslanze 224. Die Reinigungslanze 224 weist zum einen, wie bereits anhand der Fig. 1 bis 12 erläutert wurde, Austrittsöffnungen für Spülflüssigkeit auf sowie auch eine Haltevorrichtung für den Innendeckel des Kanisters. Die Reinigungslanze 224 kann in den Innenraum des Kanisters vorgeschoben werden und dann auch im Reinigungsbetrieb innerhalb des Kanisters gedreht werden, wobei diese Funktionalität der Reinigungslanze 224 ebenfalls bereits anhand der Fig. 1 bis 12 beschrieben wurde.

Die Koppeleinrichtung 220 ist mit einer in den Fig. 14 und 15 nicht erkennbaren Wiegeeinrichtung versehen, wobei diese Wiegeeinrichtung bereits anhand der Fig. 1 bis 12 beschrieben wurde. Mittels der Wiegeeinrichtung kann das Gewicht eines an den Einlass 222 angekoppelten Kanisters fortlaufend erfasst werden.

Um zu verhindern, dass Vibrationen, Stöße und Schwingungen vom Auslass 236 zum Einlass 222 übertragen werden und dadurch das Messergebnis der Wiegeeinrichtung verfälschen, sind in der Flüssigkeitsleitung 234 zwischen dem Einlass 222 und dem Auslass 236 zwei flexible Muffen 240a und 240b vorgesehen. Die beiden flexiblen Muffen 240a, 240b sind jeweils rohrförmig aus elastischem Material ausgebildet, können beispielsweise aber auch in Form eines Faltenbalgs ausgebildet sein, vgl. den in Fig. 5 dargestellten Faltenbalg.

Ausgehend vom Einlass 222 wird aus dem Kanister entnommene Flüssigkeit zunächst durch die flexible Muffe 240b, dann durch einen U-förmigen Bogen 242, dann durch die flexible Muffe 240a und dann weiter durch die Flüssigkeitsleitung 234 über die Ventilmittel 238 und zum Auslass 236 geführt. Die Box, in der die Ventilmittel 238 angeordnet sind, ist mit einem Gehäuse der Koppeleinrichtung 220 verbunden, die beispielsweise an dem Rahmen 226 oder an einem Rahmen der Feldspritze 200 befestigt ist. Um nun zu verhindern, dass Vibrationen, Stöße und Schwingungen von dem Gehäuse oder von der Flüssigkeitsleitung 206 über den Auslass 236 bis zum Einlass 222 übertragen werden, sind die beiden flexiblen Muffen 240a, 240b vorgesehen. Mittels der beiden flexiblen Muffen 240a, 240b wird eine mechanische Entkopplung des Gehäuses bzw. des Auslasses 236 von der Wiegeeinrichtung bzw. dem Einlass 222 erreicht. Diese mechanische Entkopplung ist dabei so weitgehend, dass keine Vibrationen, Stöße oder Schwingungen übertragen werden, die das Messergebnis der Wiegeeinrichtung nachteilig beeinflussen können.

Die beiden flexiblen Muffen 240a, 240b sind dabei horizontal angeordnet, so dass eine Ausdehnung bzw. Verkürzung der flexiblen Muffen 240a, 240b, beispielsweise durch wechselnden Innendruck der Flüssigkeitsleitung 234, nicht zu einer Verschiebung des Einlasses 222 und damit der Wiegeeinheit führt. Denn eine Verkürzung oder Verlängerung der beiden flexiblen Muffen 240a, 240b wird vollständig in eine horizontale Verschiebung des U-förmigen Bogens 242 umgesetzt. Die beiden flexiblen Muffen 240a, 240b sind auch parallel zueinander angeordnet, so dass eine Verkürzung oder Verlängerung der beiden flexiblen Muffen 240a, 240b nicht zu einer Verdrehung oder Verkippung führen kann, sondern, wie ausgeführt wurde, immer nur zu einer Bewegung des U-förmigen Bogens 242.

Eine horizontale Anordnung der beiden flexiblen Muffen 240a, 240b, oder gegebenenfalls auch nur einer einzigen flexiblen Muffe, kann selbst im ungünstigsten Fall auch ausschließlich zu einer Verschiebung der Wiegeeinheit in horizontaler Richtung führen, wobei eine solche horizontale Verschiebung das Messergebnis der Wiegeeinrichtung nicht beeinflusst, da die Gewichtskraft des angekoppelten Kanisters selbstverständlich immer nur in senkrechter Richtung wirkt.

Fig. 15 zeigt die Koppeleinrichtung 220 im Zustand der Fig. 14, wobei ein anderer Blickwinkel als in Fig. 14 gewählt wurde. Zu erkennen sind der Einlass 222, die beiden flexiblen Muffen 240a, 240b, der U-förmige Bogen 242 sowie auch der Auslass 236.

## Patentansprüche

1. Koppeleinrichtung für Kanister, insbesondere für Kanister mit Innendeckelverschluss für ein geschlossenes Transfersystem für Pflanzenschutzmittel und/oder Flüssigdünger, mit einem Gehäuse mit einem Einlass zum Ankoppeln einer Auslassöffnung eines Kanisters, mit einem Auslass zum Verbinden mit einer Mischeinrichtung und/oder einem Vorratstank, mit Ventilmitteln zum Öffnen und Verschließen einer Strömungsverbindung vom Einlass zum Auslass, und mit einer Reinigungslanze, wobei die Reinigungslanze im angekoppelten Zustand des Kanisters in den Kanister einschiebbar ist, **dadurch gekennzeichnet, dass** eine Wiegeeinrichtung zum Erfassen eines Gewichts des Kanisters im angekoppelten Zustand vorgesehen ist und dass wenigstens eine flexible Muffe in einer Strömungsverbindung zwischen dem Einlass und dem Auslass vorgesehen ist, um eine Flüssigkeitsleitung vom Einlass bis zu der elastischen Muffe von einer Flüssigkeitsleitung von der elastischen Muffe zum Auslass mechanisch weitgehend zu entkoppeln.

2. Koppeleinrichtung nach Anspruch 1, **dadurch gekennzeichnet, dass** in der Strömungsverbindung zwischen dem Einlass und dem Auslass zwei elastische Muffen vorgesehen sind, wobei die beiden Muffen bezüglich ihrer Durchströmungsrichtung parallel zueinander angeordnet sind.

3. Koppeleinrichtung nach Anspruch 2, **dadurch gekennzeichnet, dass** die beiden elastischen Muffen mittels eines u-förmigen Bogens der Flüssigkeitsleitung miteinander verbunden sind.

4. Koppeleinrichtung nach Anspruch 2 oder 3, **dadurch gekennzeichnet, dass** die beiden elastischen Muffen horizontal angeordnet sind.

5. Koppeleinrichtung nach wenigsten seinem der vorstehenden Ansprüche, **dadurch gekennzeichnet, dass** die wenigstens eine elastische Muffe als Faltenbalg ausgebildet ist.

6. Koppeleinrichtung nach einem der vorstehenden Ansprüche, **dadurch gekennzeichnet, dass** die Wiegeeinrichtung mit wenigstens einer Wiegezelle versehen ist, wobei insbesondere die Wiegezelle wenigstens einen mit Dehnmessstreifen versehenen Haltebolzen oder eine mit dem Haltebolzen verbundene Druckzelle aufweist.

7. Koppeleinrichtung nach Anspruch 6, **dadurch gekennzeichnet, dass** das Gehäuse mit dem wenigstens einen Haltebolzen verbunden ist, wobei der Haltebolzen auf die Wiegezelle einwirkt.

8. Koppeleinrichtung nach einem der vorstehenden Ansprüche, **dadurch gekennzeichnet, dass** ein erster Anschlag und ein zweiter Anschlag am Außengehäuse vorgesehen sind, wobei ein Abschnitt der Wiegeeinrichtung zwischen dem ersten Anschlag und dem zweiten Anschlag angeordnet ist, wobei der Abschnitt im Abstand von dem ersten Anschlag und im Abstand von dem zweiten Anschlag angeordnet ist, um eine Bewegung des Tragabschnitts der Wiegeeinrichtung relativ zum Außengehäuse auf einen Wegebereich zwischen dem ersten Anschlag und dem zweiten Anschlag zu begrenzen.

9. Koppeleinrichtung nach wenigstens einem der vorstehenden Ansprüche, **dadurch gekennzeichnet, dass** die Wiegeeinrichtung mittels elastischer Puffer mit dem Außengehäuse verbunden ist.

10. Koppeleinrichtung nach einem der vorstehenden Ansprüche, **dadurch gekennzeichnet, dass** die Wiegeeinrichtung mehrere Wiegezellen, insbesondere drei Wiegezellen, insbesondere drei mit Dehnmessstreifen versehene Haltebolzen oder drei Druckzellen, aufweist, wobei die Wiegezellen auf einer gedachten Kreislinie und gleichmäßig beabstandet voneinander, insbesondere in einem Winkel von jeweils 120 Grad zueinander, angeordnet sind.

11. Koppeleinrichtung nach wenigstens einem der vorstehenden Ansprüche, **dadurch gekennzeichnet, dass** eine mit der Wiegeeinrichtung gekoppelte elektronische Steuereinheit vorgesehen ist, wobei insbesondere die Steuereinheit mit den Ventilmitteln gekoppelt ist, um in Abhängigkeit von Messwerten der Wiegeeinrichtung die Ventilmittel zwischen Einlass und Auslass zu öffnen oder zu schließen, wobei insbesondere die Steuereinheit ausgebildet ist, insbesondere mittels einer auf der Steuereinheit ablaufenden Software, um eine Entnahme von Flüssigkeit aus dem Kanister zu stoppen, wenn eine Sollmenge für die Entnahme von Flüssigkeit aus dem Kanister erreicht ist, insbesondere **dadurch gekennzeichnet, dass** die Steuereinheit ausgebildet ist, insbesondere mittels einer auf der Steuereinheit ablaufenden Software, um nacheinander aus mehreren Kanistern entnommene Teilmengen an Flüssigkeit aufzuaddieren, insbesondere **dadurch gekennzeichnet, dass** die Steuereinheit ausgebildet ist, insbesondere mittels einer auf der Steuereinheit ablaufenden Software, ein Volumen einer entnommenen Flüssigkeitsmenge mittels wenigstens eines Messwerts der Wiegeeinrichtung und einer abgespeicherten oder eingelesenen Dichte der entnommenen Flüssigkeit zu berechnen, wobei insbesondere die Steuereinheit ausgebildet ist, insbesondere mittels einer auf der Steuereinheit ablaufenden Software, und/oder Mittel aufweist, insbesondere eine Leseeinrichtung für einen Code, um Eigenschaften einer Flüssigkeit in einem angekoppelten Kanister, insbesondere Dichte, automatisch in einen Speicher der Steuereinheit einzulesen, insbesondere mittels einer Codeleseeinrichtung.

12. Koppeleinrichtung nach wenigstens einem der vorstehenden Ansprüche, **dadurch gekennzeichnet, dass** mittels der auf der Steuereinheit ablaufenden Software ein Kanister als vollständig entleert erkannt wird, wenn die Wiegeeinrichtung innerhalb eines vordefinierten Zeitraums, insbesondere einer Sekunde, keine Gewichtsänderung mehr innerhalb vordefinierter Schwellwerte erfasst.

13. Koppeleinrichtung für Kanister nach einem der vorstehenden Ansprüche, **dadurch gekennzeichnet, dass** eine Steuereinheit und wenigstens ein Aktor vorgesehen sind, um das Ankoppeln des Kanisters, das Entnehmen von Flüssigkeit aus dem Kanister, das Spülen eines Innenraums des Kanisters und/oder einer Außenseite eines Verschlusses des Kanisters, und/oder das Abkoppeln des Kanisters automatisch, insbesondere mittels einer auf der Steuereinheit ablaufenden Software, vorzunehmen.

14. Koppeleinrichtung für Kanister nach einem der vorstehenden Ansprüche, **dadurch gekennzeichnet, dass** die Reinigungslanze relativ zum Gehäuse und in einem wenigstens abschnittsweise in den Kanister eingeschobenen Zustand um ihre Längsachse drehbar ist, insbesondere **dadurch gekennzeichnet, dass** ein erster Aktor, insbesondere ein Elektromotor, der mit einer Gewindespindel gekoppelt ist, vorgesehen ist, um die Reinigungslanze relativ zum Gehäuse zu verschieben und/oder um die Reinigungslanze relativ zum Gehäuse um eine Längsachse der Reinigungslanze zu drehen, insbesondere **dadurch gekennzeichnet, dass** eine Kulissenbahn vorgesehen ist, um die Reinigungslanze relativ zum Gehäuse zu verschieben und/oder zu drehen, insbesondere **dadurch gekennzeichnet, dass** eine Gewindespindel und wenigstens ein mit der Gewindespindel verbundener Kulissenstein vorgesehen ist, der in der Kulissenbahn aufgenommen ist.

15. Koppeleinrichtung nach wenigstens einem der vorstehenden Ansprüche, **dadurch gekennzeichnet, dass** ein zweiter Aktor, insbesondere ein Elektromotor, vorgesehen ist, um einen an die Koppeleinrichtung angesetzten Kanister zu fixieren und die Ventilmittel zu betätigen.
